# EUROPÄISCHE PATENTSCHRIFT

(11) **EP 3 630 379 B1**
(45) Veröffentlichungstag und Bekanntmachung des Hinweises auf die Patenterteilung: **03.01.2024**
(21) Anmeldenummer: 18725854.6
(22) Anmeldetag: 24.05.2018
(51) Int. Cl.: B08B 7/00, B08B 9/08, B08B 9/043, F27D 25/00, F28G 7/00, F22B 37/48, F16L 11/15, F16L 11/16, F16L 11/20

(54) **VORRICHTUNG UND VERFAHREN ZUM REINIGEN VON INNENRÄUMEN VON BEHÄLTERN UND ANLAGEN**
METHOD AND DEVICE FOR CLEANING INTERIORS OF CONTAINERS AND FACILITIES
DISPOSITIF ET PROCÉDÉ POUR LE NETTOYAGE D'ESPACES INTÉRIEURS DE CONTENANTS ET D'INSTALLATIONS

(30) Priorität: 24.05.2017 CH 6822017
(43) Veröffentlichungstag der Anmeldung: 08.04.2020
(73) Patentinhaber: Bang & Clean GmbH, 5504 Othmarsingen (CH)
(72) Erfinder: BÜRGIN, Markus, 5453 Remetschwil (CH)
(74) Vertreter: Frei Patent Attorneys
(86) Internationale Anmeldenummer: PCT/EP2018/063618
(87) Internationale Veröffentlichungsnummer: WO 2018/215582

(56) Entgegenhaltungen:
- EP-A2- 1 067 349
- EP-B1- 1 362 213
- WO-A1-99/15326
- WO-A1-2013/082731
- DE-A1-102012 108 183
- DE-C1- 3 600 100
- US-A- 5 307 743
- US-A1- 2007 023 097
- US-A1- 2009 277 479
- US-B1- 6 334 466

## Beschreibung

Die Erfindung bezieht sich auf das Gebiet der Reinigung von Innenräumen von Behältern und Anlagen. Sie betrifft eine Vorrichtung sowie ein Verfahren zum Entfernen von Ablagerungen in Innenräumen von Behältern und Anlagen mittels Explosionstechnologie.

Die Vorrichtung enthält eine Versorgungseinrichtung zum Bereitstellen eines explosionsfähigen Gemisches oder von dessen Ausgangskomponenten, sowie eine mit der Versorgungseinrichtung verbundene Transportleitung zum Transportieren des explosionsfähigen Gemisches zu einer Reinigungsstelle.

Die Vorrichtung und das Verfahren dienen im Speziellen der Reinigung von verschmutzten und verschlackten Verbrennungsanlagen mit Anbackungen bzw. Ablagerungen an dessen Innenwänden.

Die Innenräume von Verbrennungsanlagen, z. B. von Müllverbrennungsanlagen oder thermischen Kraftwerken, welche direkt oder indirekt dem Verbrennungsprozess ausgesetzt sind oder auch von Abhitzekesseln, welche solchen Anlagen nachgeschaltet sind, unterliegen während ihres Betriebes mehr oder weniger starken Verschmutzungen.

Diese Verschmutzungen haben anorganische Zusammensetzungen und entstehen typischerweise durch Ablagerung von Ascheteilchen an der Wand. Beläge im Bereich von hohen Rauchgas-Temperaturen sind meist sehr hart, da sie entweder geschmolzen oder angeschmolzen auf der Wand kleben bleiben oder von tiefer schmelzenden oder kondensierenden Substanzen bei deren Erstarrung an der kälteren Kesselwand zusammengeklebt werden. Solche Beläge lassen sich durch bekannte Reinigungsverfahren nur schwer und unzureichend entfernen.

Dies führt dazu, dass der die Verbrennungskammer ausbildende Kessel zwecks Reinigung periodisch abgestellt und abgekühlt werden muss. Da solche Kessel meist ziemlich grosse Abmessungen aufweisen, ist dazu oft der Aufbau eines Gerüsts im Kessel notwendig. Dies erfordert zudem einen Betriebsunterbruch von mehreren Tagen oder Wochen und ist ausserdem für das Reinigungspersonal wegen des starken Staub- und Schmutzanfalls äusserst unangenehm und ungesund. Eine meist zwangsläufige Begleiterscheinung eines Betriebunterbruchs einer Anlage sind Schäden an Behältermaterialien selber als Folge der starken Temperaturänderungen. Neben den Reinigungs- und Reparaturkosten sind die Anlagenstillstandskosten durch den Produktions- bzw. Einnahmenausfall ein wichtiger Kostenfaktor.

Herkömmliche Reinigungsverfahren, welche bei abgestellten Anlagen angewendet werden, sind beispielsweise Kesselklopfen sowie die Verwendung von Dampfstrahler, Wasserstrahlbläser/Russbläser sowie Sandstrahlen.

Ferner ist ein Reinigungsverfahren bekannt, bei welchem der erkaltete oder der in Betrieb befindliche, heisse Kessel mittels Einbringen und Zünden von Sprengkörpern gereinigt wird. Bei dem in der Veröffentlichungsschrift EP 1 067 349 beschriebenen Verfahren wird ein Sprengkörper mittels einer gekühlten Lanze in die Nähe einer verschmutzten Heizfläche gebracht, wo die Sprengladung gezündet wird. Die Heizflächen-Anbackungen werden durch die Wucht der Detonation sowie durch die von den Schockwellen erzeugten Wandschwingungen abgesprengt. Die Reinigungszeit kann mit dieser Methode im Vergleich zu den herkömmlichen Reinigungsverfahren wesentlich verkürzt werden. Ferner kann die Reinigung mit den nötigen Sicherheitsvorkehrungen während des Betriebs des Verbrennungsofens bzw. noch im heissen Zustand des Behälters stattfinden. So ist es möglich, einen Kessel auf diese Art innert Stunden und ohne Betriebsunterbruch zu reinigen, wozu mit einer herkömmlichen Reinigungsmethode Tage gebraucht werden.

Nachteilig bei diesem Verfahren ist der Einsatz von Sprengstoff. Neben den hohen Kosten für den Sprengstoff muss zur Vermeidung von Unfällen oder Diebstahl, beispielsweise bei der Lagerung des Sprengstoffs, ein grosser Sicherheitsaufwand betrieben werden. Das Einbringen von Sprengstoff in einen heissen Behälter erfordert zudem ein absolut zuverlässiges und effizientes Kühlsystem um ein vorzeitiges Detonieren des Sprengstoffs zu verhindern. Zudem ist die Handhabung mit Sprengstoff aufgrund der Gefährlichkeit und des möglichen Missbrauchs in vielen Ländern nur mit einer besonderen Zulassung erlaubt und an strenge Auflagen gebunden. Dies kann wiederum hinderlich für die tägliche Arbeit sein.

Aus der Veröffentlichungsschrift EP 1 362 213 B1 ist ein weiteres Reinigungsverfahren bekannt, welches sich ebenfalls dem Mittel der Explosionserzeugung bedient. Anstelle von Sprengstoff wird gemäss diesem Verfahren jedoch eine mit einem explosionsfähigen Gasgemisch aufblasbare Behälterhülle an das Ende einer Reinigungslanze angebracht. Die Reinigungslanze wird zusammen mit der leeren Behälterhülle in den Kesselraum eingeführt und in der Nähe der zu reinigenden Stelle positioniert. Anschliessend wird die Behälterhülle mit einem explosionsfähigen Gasgemisch aufgeblasen. Durch Zünden des Gasgemisches in der Behälterhülle wird eine Explosion erzeugt, deren Schockwellen zur Ablösung von Verschmutzungen an den Kesselwänden führen. Die Behälterhülle wird durch die Explosion zerfetzt und verbrennt. Sie stellt daher Gebrauchsmaterial dar.

Dieses Verfahren und die dazugehörige Vorrichtung weisen gegenüber der oben genannten Sprengtechnologie mit Sprengstoff den Vorteil auf, dass das Verfahren günstig im Betrieb ist. So sind z. B. die Ausgangskomponenten eines Gasgemisches, welches Sauerstoff und ein brennbares Gas, wie Ethylen, umfasst, im Vergleich zu Sprengstoff kostengünstig. Des Weiteren erfordern das Beschaffen und der Umgang mit den besagten Gasen im Gegensatz zu Sprengstoff keine besonderen Bewilligungen oder Qualifikationen, so dass jedermann mit einer entsprechenden Schulung das Verfahren ausführen kann.

Ferner ist es auch ein Vorteil, dass die Ausgangskomponenten über separate Zuleitungen der Reinigungslanze zugeführt werden und das gefährliche, explosionsfähige Gasgemisch daher erst in der Reinigungslanze kurz vor Auslösung der Explosion hergestellt wird. Im Vergleich zu Sprengstoff ist nämlich der Umgang mit den einzelnen Ausgangskomponenten des Gasgemisches weitaus weniger gefährlich, da diese einzeln höchsten brennbar jedoch nicht explosiv sind.

Das Hantieren mit einer Reinigungslanze wie sie in der EP 1 362 213 B1 beschrieben ist, hat jedoch den Nachteil, dass der Aktionsradius im Behälterinneren limitiert ist. Der Aktionsradius kann zwar durch eine grössere Lanzenlänge vergrössert werden. Allerdings können auch mit einer langen Reinigungslanze keine Radien überwunden werden, um an schwer zugängliche Stellen zu gelangen. Zudem vergrössert eine längere Reinigungslanze zwar den Aktionsradius, allerdings ist eine solche Reinigungslanze auch sperriger und entsprechend schwieriger in der Handhabung

Aufgabe vorliegender Erfindung ist es daher, die in der Veröffentlichungsschrift EP 1 362 213 B1 beschriebene Reinigungsvorrichtung so zu modifizieren, dass die zu reinigenden Stellen mit der Reinigungsvorrichtung besser zugänglich werden und selbst unzugängliche Stellen besser und einfacher erreicht werden.

Zudem soll die Handhabung der Reinigungsvorrichtung vereinfacht und sicherer und die Flexibilität grösser werden.

Die WO 2013/082731 A1 beschreibt eine Reinigungsvorrichtung mit einer Reinigungslanze, an welcher am reinigungsseitigen Endabschnitt eine flexible Behälterhülle angebracht wird, welche mit einem explosionsfähigen Gemisch befüllt wird. Die Behälterhülle, welche Gebrauchsmaterial ist und beim Zünden des explosionsfähigen Gemischs zerstört wird, kann einen halsförmigen Fortsatz aufweisen.

Die Aufgabe wird durch die Merkmale der unabhängigen Ansprüche 1 und 16 gelöst. Weiterbildungen und besondere Ausführungsformen der Erfindung ergeben sich aus den abhängigen Ansprüchen, der Beschreibung und den Zeichnungen.

Die Erfindung zeichnet sich unter anderem dadurch aus, dass die Transportleitung wenigstens abschnittsweise als Transportschlauch ausgebildet ist.

Unter dem Begriff "Schlauch" ist in dieser Erfindung ein flexibler länglicher Hohlkörper zu verstehen. Der Schlauch unterscheidet sich von einem Rohr durch seine Flexibilität. Flexibel heisst in diesem Zusammenhang insbesondere, dass der Transportschlauch in sämtliche Richtungen aus seiner Längsachse bzw. Längsrichtung auslenkbar ist.

Der Begriff "Schlauch" soll insbesondere nicht auf ein bestimmten Werkstoff oder Werkstoffgruppe beschränkt sein. So kann der Schlauch zum Beispiel aus Kunststoff oder Metall oder einer Kombination davon sein.

Der Transportschlauch weist insbesondere einen runden, ganz besondere einen kreisrunden Basisquerschnitt auf.

Die Transportleitung bzw. der Transportschlauch bildet einen geschlossenen Transportkanal aus, durch welchen ein explosionsfähiges Gemisch transportiert werden kann. Der Transport erfolgt von der zufuhrseitigen Versorgungseinrichtung zur reinigungsseitigen Auslassöffnung der Transportleitung bzw. des Transportschlauchs.

"Zufuhrseitig" bedeutet insbesondere der Versorgungseinrichtung zugewandt oder bei der Versorgungseinrichtung angeordnet. "Reinigungsseitig" bedeutet insbesondere in der Betriebsstellung der zu reinigenden Stelle (Reinigungsstelle) zugewandt oder an der Reinigungsstelle angeordnet.

Der Transportkanal kann einen Kreisquerschnitt ausbilden.

Der Transportkanal kann einen (grössten) Durchmesser von 60 mm oder weniger, von 50 mm oder weniger, von 40 mm oder weniger, von 30 mm oder weniger, oder sogar von 20 mm oder weniger aufweisen.

Der (grösste) Durchmesser kann 5 mm oder grösser, 10 mm oder grösser, 20 mm oder grösser, oder sogar von 30 mm oder grösser, sein.

Wird der Transportkanal, wie weiter unten noch näher beschrieben, aus einem Schlauch aus Kunststoff, wie z. B. Polytetrafluorethylen (PTFE), ausgebildet, so kann der grösste Durchmesser des Transportkanals aufgrund seiner glatten Innenwand und dem daraus resultierenden geringeren Druckverlust bzw. Strömungswiderstand beim Durchleiten des explosionsfähigen Gemischs kleiner dimensioniert sein. Der grösste Durchmesser des Transportkanals kann in diesem Fall 20 mm oder weniger, insbesondere 10 mm oder weniger und ganz besonders 5 mm oder weniger betragen.

Der erfindungsgemäße Transportschlauch kann auf verschiedene Weise Anwendung finden. Zum einen kann der Transportschlauch zur Überbrückung der Distanz zwischen der Versorgungseinrichtung bzw. einer Dosiereinheit bzw. einer Einlasseinrichtung und der Einführöffnung in den zu reinigenden Behälter oder Anlage dienen.

Im Gegensatz zu herkömmlichen Reinigungslanzen braucht die Versorgungseinrichtung bzw. die Dosiereinheit bzw. die Einlasseinrichtung bei einem Wechsel der Einführöffnung in den zu reinigenden Behälter bzw. Anlage nicht jedes Mal mitgeführt zu werden. Die verschiedenen Einführöffnungen zur Reinigung des Innenraums des Behälter oder Anlage von verschiedenen Seiten sind über einen entsprechend langen Transportschlauch ohne Mitführen von Versorgungseinrichtung bzw. Dosiereinheit bzw. Einlasseinrichtung einfach und bequem zu erreichen.

Zum anderen kann der Transportschlauch zur Erweiterung des Aktionsradius im Inneren des zu reinigenden Behälters oder Anlage Anwendung finden. So kann dank des Transportschlauchs von einer einzelnen Einführöffnung ein grösserer Bereich im Inneren des Behälters oder Anlage abgedeckt werden.

Die Reinigung des Behälters oder Anlage kann "Online", das heisst bei laufendem Betrieb der Anlage und entsprechend bei hohen Temperaturen von mehreren hundert Grad Celsius oder "Offline" bei eingestelltem bzw. reduziertem Betrieb und entsprechend tieferen Temperaturen erfolgen.

Je nach Einsatzzweck des Transportschlauchs, z. B. ausserhalb des zu reinigenden Behälters oder Anlage bzw. innerhalb des zu reinigenden Behälters oder Anlage, jedoch Offline, oder innerhalb des zur reinigenden Behälters oder Anlage und Online, können der Aufbau des Transportschlauchs sowie die verwendeten Materialien aufgrund der unterschiedlichen Anforderungen an die Wärmebeständigkeit unterschiedlich sein. Hierzu wird nachfolgend noch näher eingegangen.

Der Transportschlauch umfasst einen gasundurchlässigen Schlauch.

Gemäß einer Weiterbildung bildet der gasundurchlässige bzw. gasdichte Schlauch einen (geschlossenen) Transportkanal für ein explosionsfähiges Gemisch aus.

Gemäß einer besonderen Ausführungsform besteht der gasundurchlässige Schlauch aus Kunststoff oder enthält einen Kunststoff. Der Kunststoff kann z. B. ein Duroplast oder ein Thermoplast sein. Der Kunststoff kann z. B. ein Polyvinylchlorid (PVC), ein Polyurethan (PUR) oder ein Polytetrafluorethylen (PTFE) sein.

Der besagte Schlauch aus Kunststoff kann in diesen integrierte Verstärkungsfasern enthalten. Diese können als textiles Flächengebilde, wie Geflecht, vorliegen. Die Verstärkungsfasern dienen insbesondere der Erhöhung der Zug- und/oder Druckfestigkeit des Schlauches.

Ein gasundurchlässiger Schlauch kann, wie weiter unten noch erläutert, allerdings auch aus Metall bestehen.

Erfindungsgemäß ist der Transportschlauch mehrschichtig aufgebaut. Der Transportschlauch kann insbesondere mehrere ineinander geführte Schläuche von unterschiedlicher materieller und/oder struktureller Beschaffenheit umfassen.

Zwischen zwei Schläuchen, insbesondere zwischen zwei gas- bzw. flüssigkeitsundurchlässigen Schläuchen, kann ein Kühlkanal, insbesondere ein ringförmiger Kühlkanal, ausgebildet werden. Das Kühlmedium kann z. B. über einen Einlass, wie Einlassstutzen, in den Kühlkanal zugeführt werden. Der Einlass kann am Transportschlauch oder an der Einlasseinrichtung bzw. Mischeinheit angeordnet sein.

Der Kühlkanal dient insbesondere der Kühlung eines reinigungsseitig an den Transportschlauch anschliessenden Anschlussbauteils, wie Rohrkörper bzw. Lanzenkörper und/oder eine Behälterhülle, welche bei einer Heissanwendung (Online-Anwendung) in den heissen Innenraum des zu reinigenden Behälters bzw. Anlage eingeführt werden.

Der besagte Kühlkanal kann aber auch der Kühlung des Transportschlauchs dienen. Dieser erwärmt sich durch die Zündung des explosionsfähigen Gemischs im Transportkanal. Ferner erwärmt sich der Transportschlauch auch bei Online-Anwendung, d.h. wenn der Transportschlauch in den heissen Innenraum des zu reinigenden Behälters bzw. Anlage eingeführt werden muss.

Das Kühlmedium wird durch den Kühlkanal zum reinigungsseitigen Ende des Transportschlauchs gefördert.

Gemäß einer ersten Variante weist der Kühlkanal am reinigungsseitigen Ende des Transportschlauchs eine Auslassöffnung auf, so dass Kühlmedium nach aussen tritt und z. B. ein anschliessendes Bauteil (Anschlussbauteil) und/oder eine Behälterhülle von aussen kühlt.

Handelt es sich beim Anschlussbauteil um einen Rohrkörper, so kann gemäß einer zweiten Variante das Kühlmedium im Bereich des reinigungsseitigen Endes des Transportschlauchs, insbesondere im Verbindungs- bzw. Kupplungsbereich zwischen Transportschlauch und Rohrkörper, über eine Auslassöffnung in das Innere des Rohrkörpers geleitet werden und diesen von innen kühlen. Die Auslassöffnung mündet insbesondere am reinigungsseitigen Endabschnitt in den Transportkanal des Transportschlauchs.

In beiden Varianten ist im Bereich der Auslassöffnung insbesondere ein Ventil angeordnet sein. Das Ventil ist insbesondere mechanisch gesteuert Das Ventil ist insbesondere als Rückschlagventil ausgebildet und soll insbesondere das Eindringen eines flüssigen bzw. gasförmigen Mediums von aussen in den Kühlkanal verhindern. Die Steuerung der Zufuhr des Kühlmittels kann über ein zufuhrseitig angeordnetes, gesteuertes Einlassventil erfolgen.

Die Schläuche eines mehrschichtigen Transportschlauchs sind insbesondere lose ineinander geschoben. Dadurch lassen sich innen liegende Schläuche, z. B. zwecks Austausch, wieder aus dem Transportschlauch herausziehen.

Der Transportschlauch enthält erfindungsgemäß einen ersten Schlauch und einen innen liegenden, vom ersten Schlauch umgebenen, zweiten Schlauch welcher gasundurchlässig ist.

Der Transportschlauch kann einen Schlauch, insbesondere Schutzschlauch, enthalten, welcher eine oder mehrere der nachfolgenden Eigenschaften bzw. Schutzfunktionen aufweist:
- Druckbeständigkeit;
- Zugfestigkeit.

Dieser Schlauch, nachfolgend erster Schlauch genannt, ist erfindungsgemäß druckbeständig gegen radial von innen nach aussen gerichtete Druckkräfte. Solche radial wirkenden Druckkräfte treten beispielsweise bei der Zündung des explosionsfähigen Gemischs im Transportkanal sowie bei unerwünschten Rückzündungen auf. Dadurch wird der innen liegende Schlauch gegen eine Beschädigung durch radial wirkende Druckkräfte geschützt.

Der erste Schlauch kann ferner auch zugfest gegen axial wirkende Zugkräfte sein. Dadurch wird der innen liegende Schlauch gegen eine Beschädigung durch axial wirkende Zugkräfte geschützt.

Weitere bzw. alternative Schutzfunktionen, welche der erste Schlauch bzw. Schutzschlauch ausüben kann, sind:
- Schutz gegen Hitze (z. B. Kontakt mit heissen Anlageteilen), Flammen und Strahlung;
- Schutz gegen mechanische Einwirkung von aussen, wie Reibung, Knicken, Perforation, etc.

Der erste Schlauch ist insbesondere aus Metall, wie Stahl.

Der erste Schlauch kann ein Schlauchgeflecht sein. Das Schlauchgeflecht ist insbesondere aus Metall, wie Stahl. Das Schlauchgeflecht ist insbesondere ein Drahtgeflecht.

Der Transportschlauch enthält, wie oben bereits erwähnt, erfindungsgemäß einen Schlauch, welcher gasundurchlässig, d.h. gasdicht, ist. Dieser Schlauch, nachfolgend zur Unterscheidbarkeit zweiter Schlauch genannt, ist insbesondere ein innen liegender Schlauch, welcher vom ersten Schlauch umgeben ist.

Der zweite Schlauch kann gemäß einer Ausführungsvariante ein Wellschlauch sein. Ein Wellschlauch ist ein Schlauch aus starrem Material, z. B. Metall, mit wellenförmig wechselndem Durchmesser, das aufgrund der Wellung flexibel geworden ist. Beim Biegen strecken sich die Wellen am Aussenbogen auseinander, während sie gleichzeitig im Innenbogen zusammengestaucht werden.

Der Wellschlauch weist insbesondere eine Ringwellung auf. Wellschläuche aus Metall werden umgangssprachlich auch als Wellrohre bezeichnet.

Der Wellschlauch ist insbesondere aus Metall, wie Stahl (rostfreier Stahl bzw. Edelstahl). Der Wellschlauch kann aus Chromstahl sein.

Der Wellschlauch kann durch Schweissen oder hydraulisches Umformen aus einem Basisprofil hergestellt sein.

Wellschläuche aus Metall kommen insbesondere als wärmebeständige gas- bzw. flüssigkeitsundurchlässige Schläuche bei Heissanwendungen zum Einsatz.

Wegen des gewellten Profils und der damit einher gehenden hohen Oberflächenrauhigkeit auf der Schlauchinnenseite bildet der Wellschlauch im Gegensatz zu einem oben genannten gasundurchlässigen Schlauch, welcher aus einem Kunststoff ist oder einen Kunststoff enthält, trotz der Gasundurchlässigkeit insbesondere nicht den Transportkanal aus.

Der Transportschlauch kann daher ferner einen weiteren Schlauch enthalten, welcher den Transportkanal ausbildet. Dieser Schlauch, nachfolgend zur Unterscheidbarkeit dritter Schlauch genannt, ist bei einem mehrschichtigen Aufbau entsprechend innen liegend angeordnet. Der dritte Schlauch kann insbesondere vom zweiten Schlauch umgeben sein.

Der dritte Schlauch, zeichnet sich insbesondere dadurch aus, dass dessen Innenwand eine gegenüber dem zweiten Schlauch geringere Unebenheit, d. h. Rauheit aufweist.

Durch den Einsatz eines dritten Schlauchs soll der Strömungswiderstand gegenüber dem Wellschlauch, dessen Innenwandung konstruktionsbedingt wellig ausgebildet ist, deutlich herabgesetzt werden. Die Herabsetzung des Strömungswiderstandes im Transportkanal durch eine möglichst glatte Innenwand soll kleinerer Querschnitte für den Transportkanal ermöglichen. Auf diese Weise kann auch der Gesamtdurchmesser des Transportschlauches gering gehalten werden.

Der dritte Schlauch ist insbesondere ein Wickelschlauch. Der Wickelschlauch ist insbesondere aus Metall, wie Stahl (rostfreier Stahl bzw. Edelstahl). Der Wickelschlauch kann aus Chromstahl sein.

Wickelschläuche bestehen aus Windungen, die lose ineinander gehakt werden. Sie sind dadurch biegbar. Wickelschläuche können mit Hakenprofil oder mit Falzprofil, wie beispielsweise das Agraffprofil, hergestellt sein. Aufgrund des losen Ineinandergreifens der Profile sind Wickelschläuche ohne besonderen Dichtungsmassnahmen nicht gas- oder flüssigkeitsdicht.

Dies ist aber im vorliegender Erfindung nicht zwingend erforderlich, da der dritte Schlauch primär für eine möglichst glatte Innenwand und nicht unbedingt für Dichtigkeit sorgen soll. Die Dichtigkeit wird insbesondere durch den zweiten Schlauch gewährleistet.

Der dritte Schlauch kann allerdings auch ein, wie weiter unten noch erläutert, gasundurchlässiger Schlauch aus Kunststoff oder enthaltend einen Kunststoff sein. Für weitere Details zur Ausbildung eines Schlauchs aus Kunststoff oder enthaltend Kunststoff wird auf die entsprechende Offenbarung weiter unten verwiesen.

Gemäß einer Weiterbildung des Transportschlauchs weist dieser, wie bereits oben erwähnt, einen den Transportkanal bzw. den den Transportkanal ausbildenden Schlauch mittelbar oder unmittelbar umgebenen Ringkanal für den Transport eines Kühlmediums auf.

Der besagte Ringkanal kann gemäß einer Weiterbildung zwischen dem zweiten und dritten Schlauch ausgebildet werden, sofern der dritte Schlauch ebenfalls gas- bzw. flüssigkeitsundurchlässig ist.

Gemäß einer weiteren Weiterbildung enthält der Transportschlauch einen aussen liegenden Schlauch, nachfolgend zwecks Unterscheidbarkeit vierter Schlauch genannt. Der vierte Schlauch ist insbesondere flüssigkeitsundurchlässig, d.h. flüssigkeitsdicht. Der vierte Schlauch ist insbesondere auch gasundurchlässig, d.h. gasdicht.

Der vierte Schlauch ist insbesondere der äusserste Schlauch. Der äusserste Schlauch bildet die Aussenfläche des Transportschlauchs aus.

Falls kein vierter Schlauch vorgesehen ist, so bildet insbesondere der erste Schlauch den äussersten Schlauch aus.

Der vierte Schlauch umgibt insbesondere den ersten Schlauch. Zwischen dem innen liegenden, ersten und dem aussen liegenden, vierten Schlauch wird ein ringförmiger Kühlkanal für ein Kühlmedium ausgebildet.

Der vierte Schlauch kann ebenfalls ein Wellschlauch sein. Der Wellschlauch ist insbesondere von der oben beschriebenen Art. Der Wellschlauch ist insbesondere aus Metall, wie oben bereits beschrieben.

Ein vierter Schlauch in der Ausführung eines Wellschlauchs aus Metall, wie Stahl, wird insbesondere dann eingesetzt, wenn der Transportschlauch zwecks Reinigung in den heissen Innenraum des Behälters bzw. der Anlage eingeführt werden muss. In diesem Fall muss der vierte Schlauch entsprechend wärme- bzw. hitzebeständig sein. Der vierte Schlauch kann auch aus einem Kunststoff sein. Der vierte Schlauch weist insbesondere elastische Eigenschaften auf, welche im die notwendige Flexibilität verleihen. Der vierte Schlauch aus Kunststoff kann Verstärkungsfasern enthalten. Diese können als textiles Flächengebilde, wie Geflecht, vorliegen.

Ein vierter Schlauch aus Kunststoff kann dann zum Einsatz kommen, wenn dieser nicht wärme- bzw. hitzebeständig sein muss. Dies ist zum Beispiel dann der Fall, wenn der Transportschlauch nicht in den heissen Innenraum des zu reinigenden Behälters bzw. Anlage eingeführt wird.

Gemäss einer weiteren Variante wird der Transportschlauch zwar in den Innenraum des zu reinigenden Behälters bzw. Anlage eingeführt, der Behälter bzw. die Anlage ist jedoch nicht in Betrieb (Offline-Anwendung) und der Innenraum entsprechend abgekühlt, so dass keine Wärme- bzw. Hitzebeständigkeit erforderlich ist.

Der vierte Schlauch kann aus einem Elastomer, wie Ethylen-Propylen-Dien-Kautschuk (EPDM) bestehen. Alternative kann der vierte Schlauch ein Elastomer, wie Ethylen-Propylen-Dien-Kautschuk (EPDM) enthalten.

Die oben genannten ersten, zweiten, dritten und vierten Schläuche werden jeweils in der angegebenen Weise ineinander geführt. Das heisst, sie sind im Querschnitt konzentrisch zueinander angeordnet.

Gemäß einer anderen Ausführungsform besteht der Transportschlauch, wie weiter oben bereits erwähnt, aus Kunststoff, wie Polyurethan, Polyvinylchlorid, oder Polytetrafluorethylen (PTFE). Es ist auch möglich, dass der Transportschlauch einen Schlauch aus Kunststoff, wie Polyurethan, Polyvinylchlorid, oder Polytetrafluorethylen (PTFE) enthält. Der Schlauch kann auch den genannten Kunststoff enthalten. Der Schlauch aus Kunststoff, wie Polyurethan, Polyvinylchlorid, oder Polytetrafluorethylen (PTFE) bildet insbesondere den Transportkanal aus. Der besagte Schlauch ist wie erwähnt insbesondere gasundurchlässig.

Der Transportschlauch gemäss dieser Ausführungsform kann ebenfalls mehrschichtig aufgebaut sein. Der Schlauch aus Kunststoff, wie Polyurethan, Polyvinylchlorid, oder Polytetrafluorethylen (PTFE) oder enthaltend einen Kunststoff ist insbesondere der innerste Schlauch.

Der Transportschlauch gemäß dieser Ausführungsform kann insbesondere mehrere, wie zwei oder drei, ineinander geführte Schläuche von unterschiedlicher materieller und/oder struktureller Beschaffenheit umfassen.

So kann der Schlauch aus Kunststoff, wie Polyurethan, Polyvinylchlorid, oder Polytetrafluorethylen (PTFE) gemäß einer Weiterbildung der Erfindung, analog zur weiter oben beschriebenen Variante mit Wickelschlauch, in einem Schutzschlauch geführt, d.h. von diesem umgeben sein. Der Schutzschlauch übt eine oder mehrere der oben genannten Schutzfunktionen aus.

Der Schutzschlauch kann aus Metall sein.

Der Schutzschlauch kann ein, insbesondere druckbeständiges Schlauchgeflecht sein. Das Schlauchgeflecht ist insbesondere aus Metall, wie Stahl. Das Schlauchgeflecht ist insbesondere ein Drahtgeflecht.

Gemäß einer Weiterbildung der Erfindung kann der Schlauch aus Kunststoff von einem flüssigkeitsdichten und gegebenenfalls auch gasdichten Schlauch umgeben sein, welcher zusammen mit dem Schlauch aus Kunststoff den weiter oben erwähnten ringförmigen Kühlkanal ausbildet.

Der flüssigkeits- und insbesondere auch gasdichte Schlauch ist insbesondere aus Metall, wie Stahl.

Der besagte Schlauch kann auch aus Kunststoff sein oder einen Kunststoff enthalten.

Der besagte Schlauch kann z. B. ein Wellschlauch sein. Der Wellschlauch kann gemäss der weiter oben beschriebenen Art ausgebildet sein.

Der besagte Schlauch kann insbesondere zwischen einem Schutzschlauch und dem innen liegenden Kunststoffschlauch, welcher den Transportkanal ausbildet, angeordnet sein.

Gemäß einer besonderen Weiterbildung werden der Schutzschlauch und der flüssigkeits- bzw. gasundurchlässige Schlauch zur Ausbildung des ringförmigen Kühlkanals aus ein und demselben Schlauch gebildet.

Wie oben bereits erwähnt, kann der gasundurchlässige Schlauch aus Kunststoff lose in den oder die diesen umgebenden Schläuche eingeschoben sein. Dies ermöglicht den einfachen und schnellen (verschleissbedingten) Austausch des Schlauchs aus Kunststoff.

Schläuche aus Kunststoff kommen insbesondere in der Offline-Anwendungen, wenn der zu reinigende Behälter bzw. Anlage abgekühlt ist, oder ausserhalb der zu reinigenden Behälter bzw. Anlage zur Überwindung von Distanzen zwischen der Versorgungseinrichtung und der Eingangsöffnung des zu reinigenden Behälters zum Einsatz.

Anstelle über einen ringförmigen Kühlkanal kann das Kühlmedium übrigens auch über einen separaten Kühlschlauch zum reinigungsseitig an den Transportschlauch anschliessendes Bauteil und/oder eine Behälterhülle transportiert werden. Dieser Kühlschlauch kann zum Beispiel im Transportkanal oder in einem ringförmigen Kanal zwischen zwei Schläuchen angeordnet sein. Der Durchmesser des Kühlschlauchs beträgt insbesondere ein Bruchteil des Durchmessers des innersten Schlauchs, z. B. wenige Millimeter, insbesondere bis maximal 5 mm. Auf diese Weise nimmt der Kühlschlauch nur einen geringen Teil der Querschnittsfläche des Transportkanals ein bzw. findet Platz im Ringspalt des ringförmigen Kanals.

Ein solcher Kühlschlauch ist insbesondere aus Kunststoff.

Die Länge des Transportschlauchs kann mehrere Meter betragen. Die Länge des Transportschlauchs kann z. B. 5 Meter oder mehr, insbesondere 10 Meter oder mehr betragen. Grundsätzlich kann die Länge des Transportschlauchs bis 100 m oder sogar mehr als 100 m betragen.

Der Transportschlauch dient als Leitungsverlängerung zwischen der Versorgungseinrichtung bzw. zwischen einer Einlasseinrichtung oder Mischeinheit und einer reinigungsseitigen Auslassöffnung.

Die Einlasseinrichtung kann eine Mischeinheit enthalten oder aus dieser bestehen. Die Mischeinheit zeichnet sich insbesondere dadurch aus, dass in dieser aus in die Mischeinheit eingeleiteten Ausgangskomponenten ein explosionsfähiges Gemisch erzeugt wird.

Die Einlasseinrichtung kann Dosierarmaturen enthalten. Die Dosierarmaturen dienen insbesondere dazu, das von einer Dosiereinheit bereit gestellte explosionsfähige Gemisch bzw. dessen Ausgangskomponenten insbesondere gesteuert dosiert in den Transportschlauch einzuleiten.

Die Einlasseinrichtung kann auch sowohl Dosierarmaturen als auch eine Mischeinheit umfassen bzw. aus diesen bestehen.

Am reinigungsseitigen Ende der Transportleitung, welches eine Auslassöffnung ausbildet, kann eine Behälterhülle angeordnet sein, welche wenigstens einen Teil des explosionsfähigen Gemisches, welches über die Auslassöffnung aus der Transportleitung ausströmt, aufnehmen kann. Die Menge des durch die Behälterhülle aufgenommen explosionsfähigem Gemisch richtet sich nach dem Aufnahmevolumen der Behälterhülle.

Die Behälterhülle ist flexibel. Die Behälterhülle kann ein Sack sein. Die Behälterhülle kann aus Papier, Kunststoff oder einer Kombination von Papier und Kunststoff sein. Die Behälterhülle kann ein- oder mehrschichtig aufgebaut sein.

Alternativ zur Behälterhülle, kann die Vorrichtung auch dafür ausgelegt sein, dass wenigstens ein Teil des explosionsfähigen Gemisch über die Auslassöffnung am Ende der Transportleitung in den Innenraum des Behälters bzw. Anlage eingeleitet und im Innenraum eine Wolke aus dem explosionsfähigen Gemisch ausgebildet wird.

Die Wolke zeichnet sich insbesondere dadurch aus, dass diese im Innenraum gegenüber der Umgebungsatmosphäre nicht über physische Mittel bzw. über eine Barriere, wie z. B. eine Behälterhülle, abgegrenzt ist. Der Randbereich der Wolke steht vielmehr in direktem Kontakt mit der Umgebungsatmosphäre.

Am reinigungsseitigen Ende des Transportschlauchs ist insbesondere ein Anschlussbauteil, welches eine spezifische Funktion übernimmt, angeordnet. Das Anschlussbauteil bildet insbesondere einen Transportkanal für das explosionsfähige Gemisch aus. Dieser stellt die Verlängerung des Transportkanals des Transportschlauchs dar. Das Anschlussbauteil bildet insbesondere die reinigungsseitige Auslassöffnung für das explosionsfähige Gemisch aus.

Das Anschlussbauteil ist insbesondere aus Metall, wie Stahl.

Das Anschlussbauteil kann gemäß einer Ausführungsvariante ein Führungsrohr sein.

Das Führungsrohr ist insbesondere als Lanzenkörper ausgebildet.

Das Führungsrohr ist insbesondere als Handteil ausgelegt, und dient der manuellen Platzierung der Behälterhülle oder der Wolke aus explosionsfähigem Gemisch im Inneren des Behälters bzw. der Anlage. Beim Einsatz einer Behälterhülle, wird diese insbesondere am Führungsrohr befestigt. Die Befestigung kann direkt oder indirekt sein.

Das Führungsrohr wird insbesondere dann eingesetzt, wenn der Transportschlauch nicht in den Innenraum des Behälters bzw. der Anlage eingeführt werden soll. Das Führungsrohr ist entsprechend dafür ausgelegt, in den Innenraum des zu reinigenden Behälters bzw. Anlage eingeführt zu werden, insbesondere manuell eingeführt zu werden. Das Führungsrohr erlaubt hierbei die Ausrichtung und Platzierung der Auslassöffnung zur Reinigungsstelle hin.

Das Führungsrohr kann eine Länge von 0.5 Metern oder mehr, oder von 1 Meter oder mehr aufweisen. Das Führungsrohr kann insbesondere eine Länge von 2 Metern oder mehr, und ganz besonders von 3 Metern oder mehr, wie z. B. von 4 Metern, aufweisen.

Das Führungsrohr ist insbesondere über eine Kupplung, wie Schnellkupplung lösbar am Transportschlauch befestigbar. Dies ermöglicht das einfache und schnelle Wechseln von Führungsrohren mit unterschiedlicher Länge während der Reinigung. Dadurch geniesst der Benutzer ein hohes Mass an Flexibilität während der Reinigung, indem je nach Zugänglichkeit bzw. Entfernung der zu reinigenden Stellen innerhalb des Behälters bzw. der Anlage auf ein passendes Führungsrohr zurückgegriffen werden kann.

Das Führungsrohr ist insbesondere als einfaches Rohr ausgebildet. Das heisst, das Führungsrohr ist insbesondere einwandig ausgebildet. Das heisst, das Führungsrohr bildet insbesondere nur einen einzigen Kanal aus. Dadurch ist das Führungsrohr - auch bei grösserer Länge - im Vergleich mit herkömmlichen, mehrwandigen Reinigungslanzen mit integriertem Kühlkanal sehr leicht und daher äusserst handlich.

Eine Kühlung kann, wie bereits weiter oben beschrieben, über ein Kühlmedium erfolgen, welches über einen Kühlkanal im Transportschlauch zugeführt und von aussen auf das Führungsrohr appliziert oder in den Transportkanal des Führungsrohres eingespiesen wird.

Das Führungsrohr kann allerdings auch mehrwandig aufgebaut sein und einen den Transportkanal umgebenden ringförmigen Kühlkanal aufweisen. Der ringförmige Kühlkanal kann reinigungsseitig offen sein, so dass Kühlmedium nach aussen austreten und z. B. die Behälterhülle kühlen kann.

Der ringförmige Kühlkanal des Führungsrohres ist insbesondere über eine Schlauchkupplung mit einem ringförmigen Kühlkanal des Transportschlauches verbunden, so dass Kühlmedium vom Kühlkanal des Transportschlauchs in den Kühlkanal des Führungsrohrs transportiert werden kann.

Das Führungsrohr kann alternativ auch eine Anschlusseinrichtung, wie Anschlussstutzen, zum Anschliessen einer Zufuhrleitung für das Kühlmedium enthalten und zum Einspeisen des Kühlmediums in den Kühlkanal oder in den Transportkanal. Das heisst, das Kühlmedium wird nicht über den Transportschlauch sondern über eine separate Zufuhrleitung direkt dem Führungsrohr zugeführt.

Im reinigungsseitigen Endabschnitt des Führungsrohrs kann ein Behälteranschlussorgan zum Anschliessen einer Behälterhülle ausgebildet werden.

Gemäß einer anderen Ausführungsvariante ist am reinigungsseitigen Ende des Transportschlauchs ein Behälteranschlussorgan zum Anschliessen einer Behälterhülle angeordnet. Das Behälteranschlussorgan bildet entsprechend die Auslassöffnung für das explosionsfähige Gemisch aus.

Diese Ausführungsvariante kommt insbesondere dann zur Anwendung, wenn der Transportschlauch in den Innenraum des zu reinigenden Behälters bzw. Anlage eingeführt werden soll.

Das Behälteranschlussorgan kann ein Schutzrohr, eine Schutzglocke oder ein Schutzkäfig umfassen, zur Aufnahme der noch nicht expandierten, z. B. zusammengepressten oder zusammengefalteten Behälterhülle. Dasselbe trifft übrigens auch auf das am Führungsrohr angeordnete Behälteranschlussorgan zu.

Am reinigungsseitigen Ende des Transportschlauch kann eine Schlauchkupplung, insbesondere Schnellkupplung, zum werkzeugfreien Anschliessen eines Anschlussbauteils, wie z. B. des oben genannte Führungsrohrs oder des Behälteranschlussorgans, an den Transportschlauch vorgesehen sein.

Das Anschlussbauteil kann auch ein weiterer Schlauch, wie Positionierschlauch, sein, welcher (z.B. analog zum Führungsrohr bzw. Lanzenkörper) in den zu reinigenden Behälter oder Anlage einzuführen ist.

Ferner kann das Anschlussbauteil auch eine Verteileinheit sein, an welche wiederum eine Mehrzahl von wegführenden Positionierschläuchen anschliessbar sind, welche in den zu reinigenden Behälter oder Anlage einzuführen sind, und mittels welchen die Position der Reinigungsexplosion bzw. der Behälterhüllen im Innenraum des Behälters bzw. der Anlage festgelegt werden kann. Das dazugehörige Reinigungsverfahren wird nachfolgend noch näher erörtert.

Der Positionierschlauch ist insbesondere aus Kunststoff oder enthält einen Kunststoff, wie z. B. PVC oder PUR. Der Positionierschlauch kann aber auch aus Metall sein.

Die Schlauchkupplung erlaubt insbesondere eine werkzeugfreie Verbindung durch zusammenstecken der Bauteile. Es sind auch Bajonett-Verbindung denkbar, welche zum Verbinden eine Steck-Drehbewegung erfordern. Im Weiteren sind auch Schraubverbindungen möglich.

Die Schlauchkupplung weist insbesondere auch die Eigenschaft auf dass sich die Verbindung wieder werkzeugfrei lösen lässt.

Die Schlauchkupplung kann ferner dazu ausgelegt sein, ein Kühlmedium vom Kühlkanal des Transportschlauchs in den Kühlkanal des Anschlussbauteils, insbesondere eines Führungsrohrs, weiterzuleiten.

Die Transportleitung, bzw. der Transportschlauch kann direkt oder indirekt mit der Versorgungseinrichtung verbunden sein.

Es kann vorgesehen sein, dass sich der Transportschlauch von der Versorgungseinrichtung, insbesondere von einer Dosiereinheit oder von einer Einlasseinrichtung bzw. Mischeinheit, bis zur reinigungsseitigen Auslassöffnung oder einem an den Transportschlauch anschliessenden Anschlussbauteil mit Auslassöffnung erstreckt.

Der Transportschlauch kann zufuhrseitig über ein Drehgelenk mit einer Komponente der Vorrichtung, insbesondere mit einer Einlasseinrichtung bzw. Mischeinheit verbunden sein. Das Drehgelenk erlaubt insbesondere ein Drehen des Transportschlauchs um seine Längsachse. Dadurch werden Torsionskräfte vermieden, welche beim Bewegen des Transportschlauchs unweigerlich auftreten.

Das Drehgelenk kann zusammen mit einer Kupplung, insbesondere Schnellkupplung ausgebildet sein.

Das explosionsfähige Gemisch wird in der Vorrichtung insbesondere aus wenigstens einer ersten und zweiten Ausgangskomponente hergestellt.

Das genannte explosionsfähige Gemisch ist insbesondere gasförmig. Die Ausgangskomponenten sind insbesondere ebenfalls gasförmig. Allerdings können die Ausgangskomponenten, insbesondere wenn diese in Druckbehältern unter Druck stehen, auch flüssig sein. Die flüssigen Ausgangskomponenten können z. B. erst bei der Herstellung des explosionsfähigen, gasförmigen Gemischs in den gasförmigen Zustand übergehen.

Das explosionsfähige Gemisch enthält insbesondere einen Brennstoff. Der Brennstoff, welcher eine erste Ausgangskomponente darstellt, kann flüssig oder gasförmig sein. Der Brennstoff kann insbesondere eine schnell verdampfende Flüssigkeit sein. Der Brennstoff kann z. B. aus der Gruppe der brennbaren Kohlenwasserstoffe, wie Acetylen, Ethylen, Methan, Aethan, Propan, Benzin, Öl, etc. sein.

Das explosionsfähige Gemisch enthält ferner insbesondere ein Oxidationsmittel, wie z. B. gasförmiger Sauerstoff oder ein sauerstoffhaltiges Gas, welches die zweite Ausgangskomponente darstellt. Das heisst, das explosionsfähige Gemisch wird insbesondere aus einer ersten Ausgangskomponente, welche ein Brennstoff ist, und einer zweiten Ausgangskomponente, welche ein Oxidationsmittel ist, gebildet.

Die Ausgangskomponenten, welche zu einem explosionsfähige Gemisch vermischt werden, können selbst bereits Gemische, wie Gasgemische oder Flüssigkeitsgemische, sein.

Zur Herstellung des explosionsfähigen Gemisches aus wenigstens zwei von der Versorgungseinrichtung bereitgestellten Ausgangskomponenten ist zwischen der Versorgungseinrichtung und dem Transportschlauch insbesondere eine Mischeinheit bzw. eine Einlasseinrichtung mit einer Mischeinheit, angeordnet.

Die Ausgangskomponenten werden jeweils über eine separate Versorgungsleitung, wie Schlauchleitung, von der Versorgungseinrichtung, insbesondere von einer Dosiereinheit, zur Einlasseinrichtung bzw. Mischeinheit transportiert und in diese eingespiesen. Die Versorgungsleitungen sind entsprechend an der Einlasseinrichtung bzw. Mischeinheit angeschlossen.

Die Versorgungsleitungen können eine Länge von bis 3 Meter aufweisen.

Die Versorgungsleitungen können allerdings auch länger ausgebildet sein und z. B. Längen von bis zu 15 bzw. 30 Metern aufweisen. Solch längere Versorgungsleitungen eignen sich insbesondere dann, wenn die Dosierarmaturen gemeinsam mit der Mischeinheit in einer Einlasseinrichtung angeordnet sind, welche insbesondere nicht Teil der Versorgungseinrichtung bzw. Dosiereinheit ist.

Die Mischeinheit bildet insbesondere eine Mischzone aus, in welcher die in die Mischeinheit eingeleiteten Ausgangskomponenten zum explosionsfähigen Gemisch vermischt werden. Die Mischeinheit bildet entsprechende Zufuhrkanäle für die Ausgangskomponenten aus, welche in die Mischzone einmünden.

Das explosionsfähigen Gemisch wird anschliessend von der Mischeinheit in die Transportleitung eingespiesen und zu einer reinigungsseitigen Auslassöffnung der Transportleitung transportiert.

Die Einlasseinrichtung bzw. Mischeinheit kann ferner dazu ausgelegt sein, ein Kühlmedium in einen Kühlkanal, insbesondere ringförmigen Kühlkanal der Transportleitung einzuspeisen.

Das Kühlmedium kann grundsätzlich ein Gas, wie Luft, oder eine Flüssigkeit, insbesondere Wasser sein bzw. enthalten. Das Kühlmedium ist insbesondere ein Flüssigkeits-Gas-Gemisch, wie Wasser-Luft-Gemisch.

Das Kühlmedium bzw. die einzelnen Ausgangskomponenten des Kühlmediums, wie Wasser und Luft, z. B. Pressluft, werden jeweils über eine entsprechende Versorgungsleitung, wie Schlauchleitungen, zur Einlasseinrichtung bzw. Mischeinheit transportiert und in diese eingespiesen. Die Versorgungsleitungen sind entsprechend an der Einlasseinrichtung bzw. Mischeinheit angeschlossen. Die Zufuhr des Kühlmediums wie Wasser und/oder Luft wird von der Steuerungseinrichtung über entsprechende Armaturen gesteuert. Diese Armaturen können in der Dosiereinheit oder der Mischeinheit angeordnet sein bzw. sind in der Einlasseinrichtung angeordnet.

Das Kühlmedium bzw. die einzelnen Ausgangskomponenten des Kühlmediums können insbesondere ebenfalls von der Versorgungseinrichtung über Versorgungsleitungen zur Einlasseinrichtung bzw. Mischeinheit transportiert werden.

Erfindungsgemäß ist in der Mischeinheit eine Zündeinrichtung zur Zündung des explosionsfähigen Gemischs angeordnet.

Die zündwirksame Komponente der Zündeinrichtung ist insbesondere in der Mischzone oder im Anschluss an die Mischzone in der Mischeinheit angeordnet.

Die Versorgungseinrichtung umfasst unter anderem Druckbehälter, aus welchen die Ausgangskomponenten über die Versorgungsleitungen zur Einlasseinrichtung bzw. Mischeinheit transportiert werden.

Gemäß einer Weiterbildung umfasst die Versorgungseinrichtung eine Dosiereinheit zum dosierten Bereitstellen des explosionsfähigen Gemisches oder dessen Ausgangskomponenten.

Die Dosiereinheit kann ferner auch zum Bereitstellen des Kühlmediums ausgelegt sind.

Die bereits genannten Versorgungsleitungen führen entsprechend von der Dosiereinheit zur Einlasseinrichtung bzw. Mischeinheit.

Die Einlasseinrichtung bzw. Mischeinheit ist insbesondere zwischen der erwähnten Dosiereinheit und dem Transportschlauch angeordnet.

Die Dosiereinheit ist insbesondere als Gerät, z. B. als mobiles Gerät ausgebildet. Die Dosiereinheit kann entsprechend auf Rollen bzw. Rädern gelagert sein. Die Ausgangskomponenten der Dosiereinheit sind insbesondere in einem Gehäuse untergebracht.

Die oben genannten Druckbehälter sind insbesondere als Dosierbehälter ausgelegt, welche die Ausgangskomponenten in einer festgelegter Dosierung Bereitstellen, so dass die Ausgangskomponenten in der Einlasseinrichtung bzw. Mischeinheit im stöchiometrischen Verhältnis zum explosionsfähigen Gemisch gemischt werden können. Die Dosierbehälter sind insbesondere Teil der Dosiereinheit. Das heisst, die Dosierbehälter sind insbesondere in der Dosiereinheit angeordnet.

Die Dosierbehälter können wiederum aus Druckgasflaschen mit den Ausgangskomponenten gespiesen werden. Entsprechend ist die Dosiereinheit über Versorgungsleitungen mit den Druckgasflaschen verbunden.

Die Vorrichtung umfasst auch eine Steuerungseinrichtung zur Steuerung des Verfahrens. Die Steuerungseinrichtung steuert die, insbesondere dosierte, Einleitung des explosionsfähigen Gemischs, bzw. dessen Ausgangskomponenten in die Transportleitung bzw. in die Einlasseinrichtung bzw. Mischeinheit. Ferner steuert die Steuerungseinrichtung auch die Zündeinrichtung, über welche die Explosion ausgelöst wird. Die Steuerungseinrichtung steuert auch die Zufuhr des Kühlmediums in die Transportleitung bzw. Einlasseinrichtung bzw. Mischeinheit.

Die Steuerungseinrichtung ist insbesondere ebenfalls in der Dosiereinheit angeordnet. Die Steuerungseinrichtung kann eine Eingabeeinheit umfassen. Die Eingabeeinheit kann in der Dosiereinheit angeordnet sein.

Zusätzlich oder alternativ zu einer in der Dosiereinheit angeordneten Eingabeeinheit kann eine gegenüber der Dosiereinheit mobile kabelgebundene oder kabellose Eingabeeinheit vorgesehen sein, welche Eingaben abseits der Dosiereinheit ermöglichen.

Die Eingabeeinheit, kann Bedienknöpfe, eine Eingabetastatur oder einen berührungssensitiven Bildschirm (Touch-Screen) umfassen. Ferner kann die Eingabeeinheit auch Ausgabemittel wie Bildschirm oder Anzeigeleuchten enthalten.

Die Vorrichtung umfasst, wie bereits erwähnt, zur dosierten Einleitung des gasförmigen Gemischs bzw. der Ausgangskomponenten insbesondere Dosierarmaturen. Jeder Ausgangskomponente ist jeweils eine Dosierarmatur zugeordnet. Die Dosierarmatur beinhaltet insbesondere ein Ventil für den gesteuerten Durchfluss der Ausgangskomponenten.

Die Dosierarmaturen können in der Dosiereinheit angeordnet sein. Die Dosierarmaturen können allerdings auch an der Einlasseinrichtung bzw. Mischeinheit angeordnet sein.

Grundsätzlich ist es auch möglich, dass die Einlasseinrichtung bzw. Mischeinheit in die Dosiereinheit integriert ist. Es können insbesondere auch sowohl die Dosierarmaturen als auch die Mischeinheit in die Dosiereinheit integriert sein. Entsprechend kann der Transportschlauch auch (direkt) an die Dosiereinheit angeschlossen sein.

Das zur Erfindung gehörige Reinigungsverfahren gemäß Anspruch 16 beruht auf dem Prinzip, ein explosionsfähiges Gemisch mittels der Transportleitung in die Nähe einer Reinigungsstelle zu bringen, um das explosionsfähige Gemisch möglichst nahe an der Reinigungsstelle zur Explosion zu bringen.

Das Reinigungsverfahren umfasst die Schritte:
- Bereitstellen eines explosionsfähigen Gemischs in der Transportleitung, und
- Transportieren des explosionsfähigen Gemischs zu einer reinigungsseitigen Auslassöffnung der Transportleitung;
- gesteuertes Zünden des explosionsfähigen Gemisches mittels einer Zündeinrichtung, wobei das explosionsfähige Gemisch zur Explosion gebracht wird.

Hierzu werden die Ausgangskomponenten von der Versorgungseinrichtung bzw. der Dosiereinheit über die Versorgungsleitungen in eine Mischeinheit eingeleitet und in der Mischeinheit miteinander zum explosionsfähigen Gemisch vermischt.

Die in den Druckbehältern unter Überdruck stehenden Ausgangskomponenten gelangen beim Einleiten in die Einlasseinrichtung bzw. Mischeinheit in den niedrigeren Umgebungsdruck, wodurch diese die notwendige kinetische Energie für deren Transport durch die Versorgungsleitung bzw. für den Transport des explosionsfähigen Gemischs durch die Transportleitung erhalten.

Die Mischeinheit bildet eine Mischzone aus, in welcher die Ausgangskomponenten zum explosionsfähigen Gemisch miteinander vermischt werden. Das explosionsfähige Gemisch wird von der Mischzone in die Transportleitung und somit in den Transportschlauch eingeleitet und in dieser bzw. in diesem weiter in Richtung Auslassöffnung transportiert.

In Ausführung des Verfahrens wird insbesondere eine Behälterhülle zur Aufnahme eines explosionsfähigen Gemischs bereit gestellt.

Die Behälterhülle wird insbesondere mit dem aus der Auslassöffnung der Transportleitung austretenden explosionsfähigen Gemisch gefüllt.

Hierzu wird vor dem Bereitstellen des explosionsfähigen Gemischs in der Transportleitung eine Behälterhülle am reinigungsseitigen Auslassöffnung der Transportleitung angebracht.

Gemäss einer Verfahrensvariante wird mit dem aus der Auslassöffnung der Transportleitung austretenden explosionsfähigen Gemisch im Innenraum des zu reinigenden Behälters bzw. Anlage eine Wolke aus explosionsfähigem Gemisch ausgebildet.

Gemäß einer besonderen Variante umfasst das Verfahren die folgenden weiteren Schritte:
- Positionieren von mehreren Positionierschläuchen mit jeweils einer am Positionierschlauch angebrachten Behälterhülle an verschiedenen Stellen im Innenraum des zu reinigenden Behälters oder Anlage;
- paralleles oder sequenzielles Anschliessen der Positionierschläuche direkt oder indirekt an die Transportleitung;
- Beschicken der angeschlossenen Positionierschläuche in sequentieller Abfolge mit gasförmigem, explosionsfähigem Gemisch und Versorgen der Behälterhüllen mit explosionsfähigem Gemisch und dadurch Erzeugen von mehreren Reinigungsexplosionen in sequentieller Abfolge.

Zur Auslösung der Explosion wird das explosionsfähige Gemisch insbesondere über die Zündeinrichtung gezündet. Die Zündung erfolgt insbesondere in die Mischzone oder in eine daran anschliessende Zone der Mischeinheit hinein.

Die Zündung kann unmittelbar auf die Schliessung der Dosierarmaturen, d.h. unmittelbar nach Beendigung der Einleitung der Ausgangskomponenten in die Mischeinheit erfolgen. Dies trifft insbesondere dann zu, wenn im Innenraum des Behälters bzw. der Anlage eine Wolke aus explosionsfähigem Gemisch erzeugt werden soll.

Es kann auch vorgesehen sein, dass die Zündung verzögert ausgelöst wird und z. B. erst erfolgt, wenn der Überdruck in der Mischeinheit im Anschluss auf die Einleitung der Ausgangskomponenten auf unter 0.5 bar, insbesondere auf unter 0.25 bar gesunken ist.

Die durch die Zündung eingeleitete Explosion pflanzt sich von der Mischeinheit durch die Transportleitung bis hin zur Auslassöffnung fort und löst auch die Explosion des explosionsfähigen Gasgemisch in der Behälterhülle oder der Wolke im Anschluss an die Auslassöffnung aus. Im Falle einer Behälterhülle wird diese bei der Explosion zerstört.

Die Wucht der Explosion und die durch die Stosswellen in Schwingung gebrachte Fläche, z.B. eine Behälter- oder Rohrwand, bewirken das Absprengen der Wandanbackungen und Verschlackungen und somit das Reinigen der Fläche.

Die für eine Reinigung notwendige Stärke der Explosion und somit die Menge der verwendeten gasförmigen Ausgangskomponenten zur Erzeugung des explosionsfähigen Gemischs, richtet sich nach der Art der Verschmutzung und nach Grösse und Art des verschmutzten Behälters oder Anlage. Dosierung und Stärke der Explosion können und werden vorzugsweise so gewählt, dass keine Schäden an Installationen entstehen. Die Möglichkeit der optimalen Dosierung der verwendeten Stoffe vermindert einerseits die Reinigungskosten, andererseits das Gefahren- und Schadensrisiko für Anlage und Personen.

Grundsätzlich kann das explosionsfähige Gemisch unter Verzicht auf eine Mischeinheit auch direkt von der Versorgungseinrichtung, z. B. aus einem Druckbehälter, bereitgestellt und in die Transportleitung eingeleitet werden. Diese alternative Lösung wird allerdings aus sicherheitstechnischen und praktischen Gründen in der Regel nicht in Betracht gezogen.

Der oben beschriebene Reinigungszyklus kann in verschiedene Arbeitstakte aufgeteilt sein. In einem ersten Takt wird bzw. werden die Dosierarmatur(en) geöffnet und die Ausgangskomponenten, z. B. aus Druckbehältern, mit Druck in die Mischeinheit eingeleitet, dort miteinander vermischt und als explosionsfähiges Gemisch über die Transportleitung zur Auslassöffnung weitergeleitet.

Nach Einleiten der vorgegebenen Menge an Ausgangskomponenten in die Einlasseinrichtung bzw. Mischeinheit werden die Dosierarmaturen wieder geschlossen. Unmittelbar im Anschluss daran wird in einem weiteren Takt die Zündung aktiviert und das ausgebildete Gesamtvolumen an explosionsfähigem Gemisch zur Explosion gebracht.

Im Anschluss an die Explosion kann durch erneutes Öffnen der Dosierarmaturen in einem nachfolgenden Reinigungszyklus erneut ein explosionsfähiges Gemisch erzeugt werden.

Zweckmässig wird der Transportkanal im Anschluss an eine Explosion und vor einem neuen Reinigungszyklus mit einem Spülgas gespült. Das Spülen (Purging) des Transportkanals dient der Beseitigung von Rückständen, wie Wasserdampf und Verbrennungsgasen aus dem Transportkanal. Das Spülen kann z. B. mit Luft oder Sauerstoff erfolgen.

Ferner kann das Spülen des Transportkanals auch ein Kühlen beinhalten. Hierzu kann zusätzlich ein, insbesondere flüssiges Kühlmedium, wie Wasser, in den Transportkanal des Transportschlauches eingespiesen werden.

Das Kühlmedium wird insbesondere über einen entsprechenden Einlass, wie Einlassstutzen, an der Einlasseinrichtung bzw. Mischeinheit in den Transportkanal eingespiesen. Das Kühlmedium kann aber auch über einen Einlass, wie Einlassstutzen am Transportschlauch in den Transportkanal eingespiesen werden.

Der Einlass für das Kühlmedium ist stromabwärts betrachtet insbesondere im Anschluss an eine Zündeinrichtung angeordnet. Dadurch wird ein unerwünschtes Befeuchten der Zündeinrichtung verhindert.

Das Einspeisen eines flüssigen Kühlmediums in den Transportkanal ist insbesondere dann geeignet, wenn der Schlauch bzw. die Wand, welche(r) den Transportkanal ausbildet, undurchlässig ist für Flüssigkeiten wie Wasser und insbesondere eine glatte Innenwand ausbildet, wie dies z. B. bei einem Schlauch aus Kunststoff, wie Polytetrafluorethylen (PTFE), der Fall ist.

Die Einspeisung des flüssigen Kühlmediums in den Transportkanal dient insbesondere dem Schutz des Schlauchs, insbesondere wenn dieser aus Kunststoff besteht, vor einer übermässigen thermischen Belastung.

So kann beispielsweise unmittelbar nach der Zündung zwecks Kühlung des Schlauches flüssiges Kühlmedium in den Transportkanal eingespiesen werden. Die Menge an eingespiesenem Kühlmedium wird gering gehalten, da grundsätzlich möglichst wenig Feuchtigkeit in das System eingebracht werden soll. Das eingespiesene flüssige Kühlmedium verdampft insbesondere und entzieht der Umgebung dadurch Wärme. So kann beispielsweise nur während einer Zeit von 0.1 bis 1 Sekunden, insbesondere von 0.1 Sekunden, flüssiges Kühlmedium eingespiesen werden.

Auf diese Weise kann die Lebensdauer eines Kunststoffschlauches erheblich verlängert werden.

Die Einspeisung eines flüssigen Kühlmediums in den Transportkanal kann auch bei unerwünschten, jedoch nicht immer vermeidbaren Rückzündungen zum Einsatz kommen. Solche Rückzündungen werden beispielsweise mit den nachfolgend beschriebenen Sensoren frühzeitig detektiert. Die Einspeisung eines flüssigen Kühlmediums dient auch hier der unmittelbaren Kühlung des den Transportkanal ausbildenden Schlauches und somit zu dessen Schutz vor übermässiger thermischer Belastung.

Die Einspeisung eines flüssigen Kühlmediums in den Transportkanal kann vor und/oder während dem Spülen des Transportkanals mit einem Spülgas erfolgen. Die Einspeisung eines flüssigen Kühlmediums in den Transportkanal kann im Übrigen auch unabhängig vom Spülen des Transportkanals mit einem Spülgas erfolgen.

In der Einlasseinrichtung bzw. Mischeinheit kann zur Überwachung eines Reinigungszyklus ein Temperatursensor angeordnet sein. Der Temperatursensor ist insbesondere in der Mischzone angeordnet. Der Temperatursensor erfasst Temperaturwerte in der Einlasseinrichtung bzw. Mischeinheit bzw. in der Mischzone.

In der Einlasseinrichtung bzw. Mischeinheit kann - ebenfalls zur Überwachung eines Reinigungszyklus - ein Drucksensor angeordnet sein. Der Drucksensor ist insbesondere in Strömungsrichtung vor der Mischzone im Zufuhrkanal der ersten Ausgangskomponente (Brennstoff) oder der zweiten Ausgangskomponente (Oxidationsmittel) angeordnet. Der Drucksensor erfasst Druckwerte im Zufuhrkanal.

Die beiden Sensoren dienen insbesondere der frühzeitigen Erfassung von Rückzündungen. Rückzündungen treten auf, wenn sich das explosionsfähige Gemisch im Bereich der Auslassöffnung oder in der Transportleitung von selbst entzündet. Das explosionsfähige Gemisch wird folglich von der Auslassöffnung bis zurück in die Mischzone gezündet. Durch die Rückzündung können in der Mischeinheit entsprechend hohe Drücke und Temperaturen entstehen, welche durch den Drucksensor bzw. den Temperatursensor detektiert werden.

Eine Rückzündung kann bereits während des Einleitens der Ausgangskomponenten in die Einlasseinrichtung bzw. Mischeinheit erfolgen. Um mögliche Schäden in der Einlasseinrichtung bzw. Mischeinheit oder der Versorgungseinrichtung zu vermeiden, ist es wichtig bei einer Rückzündung die Dosierarmaturen bzw. die dazugehörigen Ventile umgehend zu schliessen.

Der Drucksensor bzw. der Temperatursensor ist mit der Steuerungseinrichtung gekoppelt. Die Steuerungseinrichtung umfasst insbesondere eine speicherprogrammierbare Steuerung (SPS-Steuerung). Die Steuerungseinrichtung wertet die Sensordaten aus und leitet bei Feststellen einer Rückzündung umgehend die entsprechenden Schritte, wie Schliessen der Dosierarmaturen und Abbruch des aktuellen Reinigungszyklus ein.

Zwecks Vermeidung von Schäden an den Armaturen können in der Einlasseinrichtung bzw. Mischeinheit stromabwärts von den Dosierarmaturen so genannte Rückschlagventile angeordnet sein. Diese sorgen dafür, dass ein durch eine Rückzündung ausgelöster Druckstoss nicht auf die Dosierarmatur einwirkt und diese beschädigt.

Die Vorrichtung kann im Weiteren Einführhilfen umfassen, welche das Einführen des Transportschlauchs in den Innenraum des Behälters bzw. der Anlage vereinfachen oder erst ermöglichen.

Da der Transportschlauch quer zu seiner Längsrichtung keine Eigenstabilität aufweist, ist seine Einführung in den Innenraum des Behälters bzw. der Anlage erschwert. Der Transportschlauch muss deshalb unter Umständen durch im Innenraum des Behälters bzw. der Anlage stationiertes Personal von Hand eingeführt bzw. durchgeführt werden. Dies ist jedoch nicht in jedem Fall möglich oder erwünscht.

So muss der Transportschlauch beispielsweise durch schwer zugängliche Zwischenräume geführt werden, um diesen in den zu reinigenden Innenraum einzubringen. Da die Durchgangsöffnungen versetzt zueinander angeordnet sein können, ist ein geradliniges Durchführen des Transportschlauchs durch den Zwischenraum hindurch praktisch unmöglich.

Hierzu kann nun die Vorrichtung in einer ersten Ausführung einer Einführhilfe ein Flexrohr umfassen, mittels welchem der Transportschlauch durch Durchgänge im Innenraum des zu reinigenden Behälters bzw. Anlage geführt werden kann. Das Flexrohr bildet hierzu einen, insbesondere geschlossenen Führungskanal aus. Durch diesen Führungskanal wird der Transportschlauch geführt.

Das Flexrohr zeichnet sich insbesondere dadurch aus, dass dieses zwar biegsam, jedoch trotzdem halbsteif ausgebildet ist. Dadurch lässt sich das Flexrohr aus seiner Längsachse biegen, verharrt jedoch auch unter Schwerkrafteinwirkung in seiner gebogenen Stellung. Das Flexrohr ist insbesondere aus Metall, wie Stahl. Das Flexrohr kann z. B. ein gewendelter Metallschlauch sein.

Das Flexrohr kann nun vom Bedienpersonal einmalig verlegt und dem Verlauf des Einführweges entsprechend zurecht gebogen werden. Ist das Flexrohr einmal verlegt und überbrückt beispielsweise einen Zwischenraum, so kann der Transportschlauch beliebig oft durch das Flexrohr hindurch geführt und wieder herausgezogen werden. Dies ist insbesondere deshalb wichtig, weil der Transportschlauch beim Einsatz von Behälterhüllen für jeden Reinigungsvorgang zwecks Befestigung einer neuen Behälterhülle wieder aus dem Innenraum herausgezogen und erneut in diesen eingeführt werden muss.

Ferner kann es notwendig sein, den Transportschlauch von der Seite unterschiedlich weit in den Innenraum des Behälters bzw. der Anlage einzuführen. Dies ist ohne Einführhilfe ebenfalls nicht möglich, da der Transportschlauch ohne Führung schwerkraftbedingt aus seiner seitlichen Einführrichtung ausgelenkt wird.

Die Vorrichtung kann hierzu in einer zweiten Ausführung einer Einführhilfe ein Einführrohr umfassen, mittels welchem der Transportschlauch über eine Öffnung in den Innenraum des zu reinigenden Behälters oder Anlage eingeführt werden kann. Das Einführrohr bildet hierzu einen, insbesondere geschlossenen Führungskanal aus. Die Einführtiefe des Transportschlauch lässt sich durch die Einschubposition des Einführrohres bestimmen.

Das Einführrohr ist insbesondere gerade ausgebildet. Das Einführrohr ist insbesondere aus Metall, wie Stahl.

Das Einführrohr kann an seiner reinigungsseitigen Öffnung eine nach unten gerichtete, bogenförmige Auflage für den Transportschlauch aufweisen. Die bogenförmige Auflage dient als Knickschutz und soll ein Knicken des Transportschlauchs nach unten verhindern.

Das Flexrohr und das Einführrohr können eine Kühleinrichtung zum Kühlen des Transportschlauchs im Inneren des Flexrohrs bzw. des Einführrohres enthalten. So können das Flexrohr bzw. das Einführrohr doppelwandig ausgebildet sein und einen ringförmigen Kühlkanal umfassen, welcher den Führungskanal umgibt. In den Kühlkanal wird ein Kühlmedium, wie Wasser, eingespiesen.

Das Flexrohr bzw. das Einführrohr kann eine Anschlusseinrichtung, wie Anschlussstutzen, zum Anschliessen einer Zufuhrleitung für das Kühlmedium enthalten und zum Einspeisen des Kühlmediums in den Kühlkanal.

Zur Positionierung des Transportschlauchs mit der Behälterhülle im Innenraum des zu reinigenden Behälters oder Anlage kann ein Seilzugsystem vorgesehen sein, mittels welchem der Transportschlauch mit der Behälterhülle bzw. mit der Auslassöffnung im Innenraum vertikal hochgezogen und/oder abgesenkt werden kann. Ferner kann das Seilzugsystem auch so ausgelegt sein, dass sich der Transportschlauch mit der Behälterhülle bzw. mit der Auslassöffnung im Innenraum horizontal verschieben lässt.

Das Seilzugsystem umfasst insbesondere ein oder mehrere flexible Zugmittel sowie ein oder mehrere Umlenkrollen. Das flexible Zugmittel kann ein Seil, Schnur, Riemen, Gurt, Kabel oder Kette sein.

Das Seilzugsystem kann als einfacher Seilzug ausgelegt sein oder einen solchen umfassen.

Das Seilzugsystem kann als Flaschenzug ausgelegt sein oder einen solchen umfassen.

Ein Seilzugsystem, welches insbesondere als Flaschenzug ausgelegt ist, kann auch dazu genutzt werden alternative Reinigungsmittel, wie Sprengstoff, in den Innenraum des Behälters bzw. Anlage einzuführen und darin zu positionieren.

Die erfindungsgemäße Vorrichtung ermöglicht dank dem Transportschlauch grosse, bis anhin nicht erzielte Reichweiten, ohne dass dabei die Versorgungseinrichtung bzw. die Dosiereinheit wiederholt verschoben werden müssen.

Der flexible Transportschlauch lässt sich über komplexe Einführwege in das zu reinigende Innere des Behälters bzw. der Anlage führen, was mit herkömmlichen Reinigungslanzen nicht möglich ist.

Dank dem besonderen Aufbau des Transportschlauchs ist dieser trotz seiner Flexibilität sehr robust und je nach Ausführungsvariante sowohl druck- als auch hitzebeständig. Die glatte Innenwand des Transportkanals ermöglicht zudem den Transport des explosionsfähigen Gemischs über grosse Distanzen ohne einschneidenden Druckverlust.

Da die Einlasseinrichtung bzw. Mischeinheit im Gegensatz zu herkömmlichen Reinigungslanzen nicht mehr an einem Handteil, wie Lanzenkörper, sondern in Strömungsrichtung vielmehr vor dem Transportschlauch angeordnet ist, wird die Handhabung erheblich vereinfacht. So wiegt ein als Handteil ausgelegter Lanzenkörper ohne Einlasseinrichtung bzw. Mischeinheit wesentlich weniger als eine herkömmliche Reinigungslanze mit Einlasseinrichtung bzw. Mischeinheit.

Die Einlasseinrichtung bzw. Mischeinheit müssen wie die Versorgungseinrichtung bzw. Dosiereinheit gemäss Erfindung nicht mehr ständig verschoben werden.

Die Anordnung der Einlasseinrichtung bzw. Mischeinheit weit abseits des Handteils erhöht zudem die Sicherheit, da das Bedienpersonal bei der Bedienung der Vorrichtung nicht mehr unmittelbar bei der Einlasseinrichtung bzw. Mischeinheit steht. Hierzu ist anzumerken, dass die Einlasseinrichtung bzw. Mischeinheit über das gesamte System betrachtet am ehesten für sicherheitsrelevante Störungen, wie sie beispielsweise bei Rückzündungen auftreten, anfällig ist.

Nachfolgend wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1a:: eine Querschnittsansicht eines erfindungsgemäßen Transportschlauchs;
- Figur 1b:: eine Querschnittsansicht des Wellschlauchs eines Transportschlauches nach Figur 1a;
- Figur 1c:: eine Detailansicht eines Transportschlauchs nach Figur 1a;
- Figur 2:: eine Querschnittsansicht einer weiteren Ausführungsform eines erfindungsgemäßen Transportschlauchs mit Kühlkanal,
- Figur 3a:: eine Querschnittsansicht einer weiteren Ausführungsform eines erfindungsgemäßen Transportschlauchs mit Kühlkanal;
- Figur 3b:: eine Seitenansicht des Transportschlauchs nach Figur 3a;
- Figur 4:: den zufuhrseitigen Bereich erfindungsgemäßen Reinigungsvorrichtung;
- Figur 5a:: den reinigungsseitigen Bereich der Reinigungsvorrichtung nach Figur 4 gemäß einer ersten Konfiguration;
- Figur 5b:: den reinigungsseitigen Bereich der Reinigungsvorrichtung nach Figur 4 gemäß einer zweiten Konfiguration;
- Figur 6:: eine Ausführungsvariante der erfindungsgemäßen Reinigungsvorrichtung;
- Figur 7:: eine weitere Ausführungsvariante der erfindungsgemäßen Reinigungsvorrichtung;
- Figur 8:: eine weitere Ausführungsvariante der erfindungsgemäßen Reinigungsvorrichtung;
- Figur 9a:: eine weitere Ausführungsvariante der erfindungsgemäßen Reinigungsvorrichtung;
- Figur 9b:: eine Abwandlung der Ausführungsvariante gemäß Figur 9a;
- Figur 10a:: eine weitere Ausführungsvariante der erfindungsgemäßen Reinigungsvorrichtung;
- Figur 10b:: eine Detailansicht der Reinigungsvorrichtung nach Figur 10a aus dem Bereich des Flexrohres;
- Figur 11:: eine weitere Ausführungsvariante der erfindungsgemäßen Reinigungsvorrichtung;
- Figur 12:: eine Seitenansicht einer weiteren Ausführungsvariante eines Einführrohres;
- Figur 13:: eine Querschnittsansicht einer weiteren Ausführungsvariante einer erfindungsgemäßen Reinigungsvorrichtung;
- Figur 14a:: eine weitere Ausführungsvariante einer erfindungsgemäßen Reinigungsvorrichtung;
- Figur 14b:: eine Querschnittsansicht der Verteileinheit gemäß der Ausführungsvariante nach Figur 14a.

Grundsätzlich sind in den Figuren gleiche Teile mit gleichen Bezugszeichen versehen. Für das Verständnis der Erfindung sind gewisse Merkmale in den Figuren nicht dargestellt. Die beschriebenen Ausführungsbeispiele stehen beispielhaft für den Erfindungsgegenstand und haben keine beschränkende Wirkung.

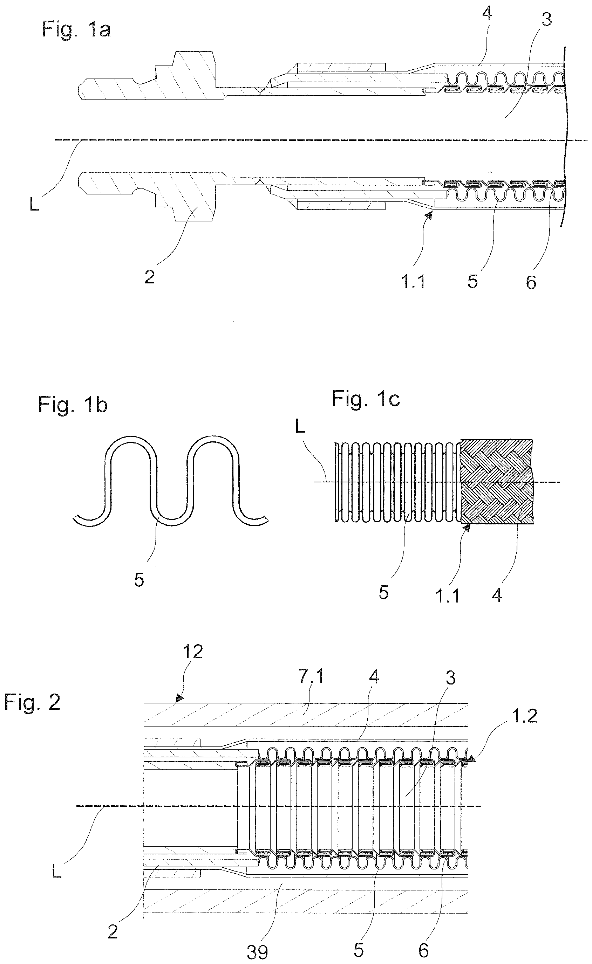

Der in **Figur 1a bis 1c** dargestellte Transportschlauch 1.1 weist einen innen liegenden Wickelschlauch 6 mit einem Falzprofil aus Metall auf. Der Wickelschlauch 6 bildet den Transportkanal 3 für das explosionsfähige Gemisch aus. Der Wickelschlauch 6 bildet eine glatte Innenwand aus, welche lediglich durch eine wendelförmig verlaufende Nut unterbrochen wird, entlang welcher die Falzprofile ineinandergreifen. Das lose Ineinanderfügen der Falzprofile verleiht dem Wickelschlauch 6 die notwendige Flexibilität. Allerdings ist der Wickelschlauch 6 dadurch auch nicht gasdicht.

Für die notwendige Gasdichtigkeit sorgt ein Wellschlauch 5 aus Metall, welcher den Wickelschlauch 6 (konzentrisch) umgibt. Die wellenförmige Ausgestaltung des Wellschlauchs 5 verleiht diesem die notwendige Flexibilität.

Zur Aufnahme von radial nach aussen wirkenden Druckkräften, wie sie während der Zündung des explosionsfähigen Gemischs entstehen, umgibt ein Schlauchgeflecht 4 aus Metall den Wellschlauch 5. Neben radialen Druckkräften nimmt das Schlauchgeflecht 4 auch axial, d.h. entlang der Längsachse L, wirkende Zugkräfte auf. Das Schlauchgeflecht 4 verhindert, dass der Wickelschlauch 6 bzw. der Wellschlauch 5 durch die genannten Druck- und Zugkräfte deformiert wird.

Gemäss Figur 1a ist der Transportschlauch 1.1 reinigungsseitig mit einer Schlauchkupplung 2 ausgestattet, welche das werkzeugfreie Verbinden von Anschlussbauteilen an den Transportschlauch 1.1 erlaubt.

Der beschriebene Transportschlauch 1.1 stellt eine Basisausführung dar, welche keinen separaten Kühlkanal aufweist und somit nur durch Einleiten eines Kühlmediums in den Transportkanal 3 von innen gekühlt werden kann.

Da der Transportschlauch 1.1 vollständig aus Metall besteht, ist dieser entsprechend hitze- bzw. wärmebeständig und zudem äusserst robust gegen die widrigen Umgebungsbedingungen, wie sie im Innenraum der zu reinigenden Behälter bzw. Anlagen herrschen, insbesondere wenn die Reinigung während des Betriebes der Anlage erfolgt.

Die **Figur 2** zeigt eine auf der Basisausführung gemäss Figur 1a-1c aufbauende Ausführungsform mit Kühlkanal 39. Der Transportschlauch 1.2 enthält analog zur Basisausführung nach Figur 1a-1c einen innen liegenden Wickelschlauch 6, einen den Wickelschlauch 6 (konzentrisch) umgebenden Wellschlauch 5 sowie ein den Wellschlauch 5 (konzentrisch) umgebendes Schlauchgeflecht 4. Für weitere Details wird auf die Beschreibung zu den Figuren 1a-1c verwiesen.

Im Unterschied zur Basisausführung nach Figur 1a-1c enthält der Transportschlauch 1.2 einen weiteren, aussen liegenden, das Schlauchgeflecht 4 (konzentrisch) umgebenden Schlauch 7.1 aus Ethylen-Propylen-Dien-Kautschuk (EPDM). Der genannte Schlauch 7.1 ist flüssigkeitsdicht.

Da der aussen liegende Schlauch aus EPDM materialbedingt elastische Eigenschaften aufweist und dadurch flexibel ist, braucht dieser im Gegensatz zum Wickelschlauch oder Wellschlauch keine besondere Aussengeometrie aufzuweisen.

Zwischen dem aussen liegenden Schlauch 7.1 und dem Schlauchgeflecht 4 wird ein ringförmiger Kühlkanal 39 ausgebildet, in welchem ein Kühlmedium 9 vom zufuhrseitigen Ende des Transportschlauchs 1.2 an sein reinigungsseitiges Ende transportiert werden kann.

An den Transportschlauch 1.2 schliesst versorgungsseitig eine Mischeinheit 12 an (nur schematisch angedeutet), welche ebenfalls einen Transportkanal sowie einen Kühlkanal ausbildet, welche mit dem Transportkanal 3 und dem Kühlkanal 39 des Transportschlauchs 1.2 verbunden sind.

Da der aussen liegende Schlauch 7.1 aus EPDM nur beschränkt hitze- bzw. wärmebeständig ist, eignet sich diese Ausführungsform eines Transportschlauchs 1.2 nicht zum Einführen in den heissen Innenraum des zu reinigenden Behälters bzw. Anlage, insbesondere wenn diese in Betrieb ist.

Der besagte Transportschlauch 1.2 findet insbesondere Einsatz für Anwendung als Leitungsverlängerung ausserhalb des zu reinigenden Innenraums oder für Anwendungen in entsprechend abgekühlten Innenräumen von zu reinigenden Behältern bzw. Anlagen.

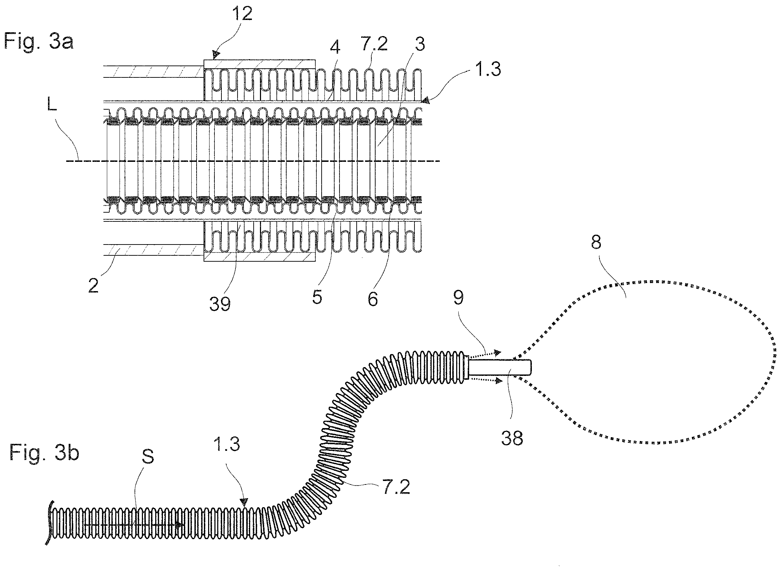

In den **Figuren 3a-3b** wird eine weitere Ausführungsform eines Transportschlauchs 1.3 dargestellt, welche ebenfalls auf der Basisausführung gemäss Figur 1a-1c aufbaut und einen Kühlkanal 39 ausbildet.

Die Ausführungsform nach Figur 3a-3b unterscheidet sich von der Ausführungsform nach Figur 2 dadurch, dass der aussen liegende Schlauch 7.2 nicht aus Kunststoff besteht sondern ein Wellschlauch aus Metall ist. Der aussenliegende Wellschlauch 7.2 kann gleich aufgebaut sein, wie der Wellschlauch 5, welcher den Wickelschlauch 6 umgibt und für die notwendige Gasdichtigkeit sorgt. Entsprechend ist der Wellschlauch 7.2 auch flüssigkeitsdicht.

Zwischen dem aussen liegenden Wellschlauch 7.2 und dem Schlauchgeflecht 4 wird entsprechend ebenfalls ein ringförmiger Kühlkanal 39 ausgebildet.

Da dieser Transportschlauch 1.3 mit Kühlkanal 39 vollständig aus Metall besteht, ist dieser entsprechend hitze- bzw. wärmebeständig und kann für Heissanwendungen in heissen Innenräumen von zu reinigenden Behältern bzw. Anlagen, welche z. B. in Betrieb sind, eingesetzt werden.

An den Transportschlauch 1.3 schliesst versorgungsseitig eine Mischeinheit 12 an (nur schematisch angedeutet), welche ebenfalls einen Transportkanal sowie einen Kühlkanal ausbildet, welche mit dem Transportkanal 3 und dem Kühlkanal 39 des Transportschlauchs 1.3 verbunden sind.

In Figur 3b ist ein Aufbau dargestellt, wie er typisch ist für einen (gekühlten) Transportschlauch 1.3, welcher in den Innenraum eines zu reinigenden Behälters bzw. Anlage eingeführt werden soll.

Am reinigungsseitigen Ende des Transportschlauchs 1.3 schliesst ein Behälteranschlussorgan 38 an, an welchem eine Behälterhülle 8 angebracht ist. Das Behälteranschlussorgan 38 weist einen Transportkanal mit einer reinigungsseitigen Auslassöffnung auf, über welchen das explosionsfähige Gemisch vom Transportschlauch 1.3 in die Behälterhülle 8 eingeleitet wird.

Der Transportschlauch 1.3 wird zusammen mit der Behälterhülle 8 in den Innenraum eines zu reinigenden Behälters bzw. Anlage eingeführt. Die Behälterhülle 8 wird allerdings erst im Innenraum des zu reinigenden Behälters bzw. Anlage mit dem explosionsfähigen Gemisch befüllt, welches in Strömungsrichtung S durch den Transportkanal 3 zugeführt wird.

Der Kühlkanal 39 weist am reinigungsseitigen Ende des Transportschlauch 1.3 eine Austrittsöffnung auf, aus welcher das Kühlmedium 9 austritt und ein Anschlussbauteil, wie Behälteranschlussorgan 38 bzw. die Behälterhülle 8 kühlt.

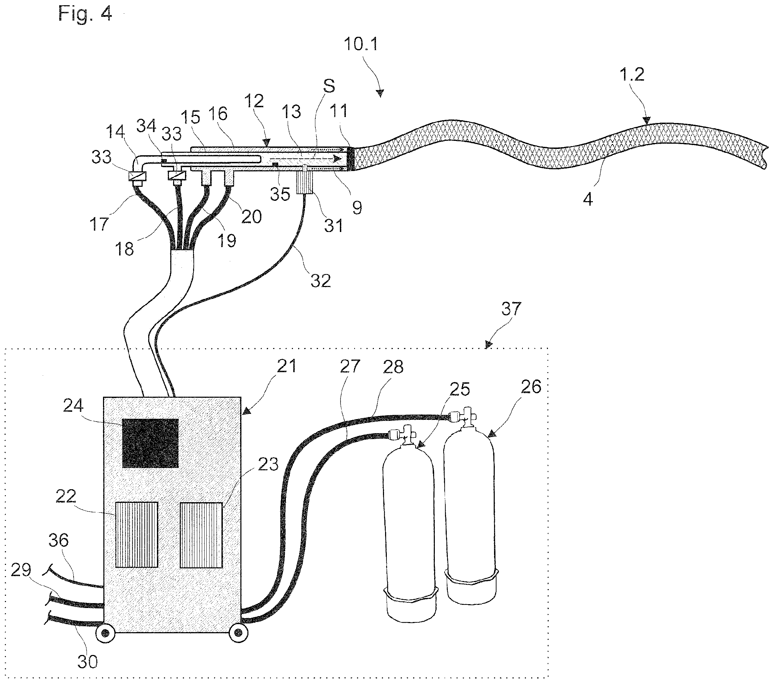

Die **Figur 4** zeigt die erfindungsgemäße Vorrichtung 10.1 aus dem Bereich der Versorgungseinrichtung 37. Die Versorgungseinrichtung 37 umfasst eine Dosiereinheit 21 mit Dosierbehältern 22, 23 zur Versorgung einer an die Dosiereinheit 21 stromabwärts angeschlossenen Mischeinheit 12 mit einer ersten und zweiten Ausgangskomponente zur Herstellung des explosionsfähigen Gemischs. Die erste und zweite Ausgangskomponente werden über Versorgungsleitungen 17, 18 der Mischeinheit 12 zugeführt. Die Dosierbehälter 22, 23, werden wiederum über Versorgungsleitungen 27, 28 aus Gasflaschen 25, 26, welche nicht in der Dosiereinheit 21 integriert sind, mit den jeweiligen Ausgangskomponenten versorgt.

Die Dosiereinheit 21 ist als mobiles Gerät auf Rollen ausgebildet, welches die Handhabung der Vorrichtung 10.1 in einer Anlage vereinfachen soll.

Die Dosiereinheit 21 wird ferner über entsprechende Versorgungsleitungen 29, 30 von extern mit Wasser sowie Pressluft versorgt. Diese Komponenten werden zur Herstellung des Kühlmediums benötigt.

Ferner weist die Dosiereinheit zur Stromversorgung auch eine Verbindungsleitung 36 zu einer externen Stromquelle auf.

In der Dosiereinheit 21 ist überdies eine Steuerungseinrichtung 24 zur Steuerung des Reinigungsverfahrens angeordnet. Über die Steuerungseinrichtung 24 wird unter anderem die Einleitung der Ausgangskomponenten in die Mischeinheit 12 gesteuert.

An die Dosiereinheit 21 schliesst stromabwärts eine Mischeinheit 12 an. Über eine erste Versorgungsleitung 17 wird eine erste Komponente in Form eines gasförmigen Brennstoffes, wie Ethylen in einen ersten Zufuhrkanal 14 der Mischeinheit 12 eingeleitet.

Über eine zweite Versorgungsleitung 18 wird eine zweite Komponente in Form eines gasförmigen Oxidationsmittels, wie Sauerstoff in einen zweiten Zufuhrkanal 15 der Mischeinheit 12 eingeleitet. Die beiden Zufuhrkanäle 14, 15 münden in einer Mischzone 13, in welcher die beiden Komponenten zu einem explosionsfähigem, gasförmigen Gemisch vermischt werden.

An die Mischeinheit 12 schliesst stromabwärts ein Transportschlauch 1.2 an, welcher über ein Drehgelenk 11 an die Mischeinheit 12 angeschlossen ist. Das explosionsfähige Gemisch wird von der Mischzone 13 über einen Transportkanal in den Transportkanal 3 des daran anschliessenden Transportschlauchs 1.2 eingeleitet.

Im vorliegenden Ausführungsbeispiel ist der zweite Zufuhrkanal 15 ringförmig um den ersten Zufuhrkanal 14 angelegt. Diese Anordnung ist allerdings nicht zwingend.

Die Mischeinheit 12 enthält im Weiteren eine Zündeinrichtung 31 mit einer in der Mischzone 13 bzw. im Anschluss an die Mischzone angeordneten zündwirksamen Komponente. Die Zündeinrichtung 31 ist über eine Verbindungsleitung 32 mit der Dosiereinheit 21 bzw. mit der dazugehörigen Steuerungseinrichtung 24 verbunden. Die Zündeinrichtung 31 bzw. der Zündvorgang wird über die Steuerungseinrichtung 24 gesteuert.

Die Mischeinheit 12 umfasst im Weiteren einen Kühlkanal 16, welcher ringförmig um die Mischzone 13 bzw. um den daran anschliessende Transportkanal der Mischeinheit 12 angelegt ist.

Der Kühlkanal 16 ist über die Drehgelenkverbindung 11 mit dem Kühlkanal 39 des Transportschlauchs 1.2 verbunden.

Das Kühlmedium 9 besteht aus Wasser und Luft, welche jeweils über separate Versorgungsleitungen 19, 20 von der Dosiereinheit 21 in den Kühlkanal 16 zugeführt werden. Die Zufuhr des Kühlmediums 9 wird ebenfalls über die Steuerungseinrichtung 24 gesteuert.

Auch wenn die Mischeinheit 12 eine Kühleinrichtung aufweist, können auch Transportschläuche angeschlossen werden, welche keinen Kühlkanal 39 zur Einleitung eines Kühlmediums 9 enthalten. In diesem Fall wird einfach kein Kühlmedium 9 in die Mischeinheit 12 eingespiesen.

An den beiden Zufuhrkanälen 14, 15 ist jeweils ein Rückschlagventil 33 angeordnet, welches die Einleitung von Druckstössen stromaufwärts aus der Mischeinheit 12 in die Versorgungsleitungen 17, 18 der Ausgangskomponenten verhindern sollen.

Im Weiteren ist in der Mischzone ein Temperatursensor 35 angeordnet, welcher Auffälligkeiten im Temperaturverlauf während eines Reinigungszyklus' detektieren soll. Zum gleichen Zweck ist in Strömungsrichtung S vor der Mischzone 13 im ersten Zufuhrkanal 14 ein Drucksensor 34 angeordnet. Dieser soll Auffälligkeiten im Druckverlauf während eines Reinigungszyklus' detektieren. Solche Auffälligkeiten treten beispielsweise bei sogenannten Rückzündungen auf.

Da Drucksensoren äusserst empfindlich sind, ist dieser in der Zufuhrleitung 14 angeordnet, wo allfällige Druckstösse gegenüber der Mischzone 13 abgeschwächt sind und so den Drucksensor 34 nicht beschädigen können.

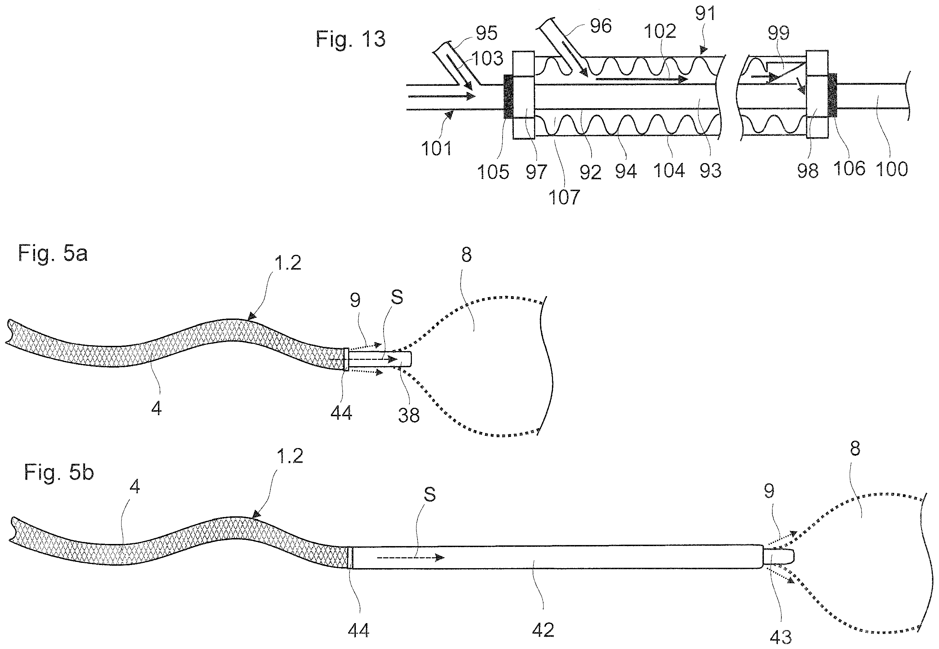

Die **Figuren 5a und 5b** zeigen die erfindungsgemäße Vorrichtung 10.1 aus dem reinigungsseitigen Bereich in zwei Konfigurationen.

Die Vorrichtung 10.1. enthält in beiden Fällen einen Transportschlauch 1.2, welcher versorgungsseitig mit einer Mischeinheit 12 verbunden ist (siehe Figur 4).

Gemäß einer ersten Konfiguration nach Figur 5a schliesst an das reinigungsseitige Ende des Transportschlauchs 1.2 ein Behälteranschlussorgan 38, z. B. in Form eines Anschlussstutzens, an, an welchem eine Behälterhülle 8 befestigt ist. Diese Konfiguration wurde bereits im Rahmen der Figur 3b beschrieben. Es wird auf die entsprechende Beschreibung verwiesen.

Gemäß dieser Konfiguration wird der Transportschlauch 1.2 zusammen mit der Behälterhülle 8 in den Innenraum eines zu reinigenden Behälters bzw. Anlage eingeführt. Der Behälterhülle 8 wird allerdings erst im Innenraum mit dem explosionsfähigen Gemisch befüllt, welches in Strömungsrichtung S durch den Transportkanal 3 zugeführt wird.

Gemäß einer zweiten Konfiguration nach Figur 5b schliesst an das reinigungsseitige Ende des Transportschlauchs 1.2 ein Führungsrohr 42 an, welches als Handteil ausgelegt ist.

Das Führungsrohr 42 weist einen Transportkanal auf, über welchen das explosionsfähige Gemisch vom Transportschlauch 1.3 in die Behälterhülle 8 eingeleitet wird. Am reinigungsseitigen Ende weist das Führungsrohr 42 ein Behälteranschlussorgan 43 mit einer Auslassöffnung auf, an welchem eine Behälterhülle 8 befestigt ist.

Gemäß dieser Konfiguration wird lediglich das Führungsrohr 42 mit der Behälterhülle 8, nicht jedoch der Transportschlauch 1.2 in den Innenraum eines zu reinigenden Behälters bzw. Anlage eingeführt. Der Behälterhülle 8 wird allerdings erst im Innenraum mit dem explosionsfähigen Gemisch befüllt, welches in Strömungsrichtung S durch den Transportkanal 3 zugeführt wird.

Das Führungsrohr 42 und das Behälteranschlussorgan 38 sind jeweils in beiden Konfigurationen über eine Schlauchkupplung 44 mit dem Transportschlauch 1.2 verbunden. Auf diese Weise lässt sich wahlweise ein Führungsrohr 42 oder ein Behälteranschlussorgan 38 am Schlauchende befestigen.

Der Kühlkanal 39 des Transportschlauchs 1.2 ist am reinigungsseitigen Ende des Transportschlauch 1.3 über die Schlauchkupplung mit dem Transportkanal des Führungsrohrs 42 verbunden. Das Kühlmedium wird entsprechend vom Transportschlauch 1.2 durch das Führungsrohr 42 geleitet und verlässt dieses über eine reinigungsseitige Austrittsöffnung. Das austretende Kühlmedium 9 kühlt die Behälterhülle 8 und gegebenenfalls das Behälteranschlussorgan 43 am Führungsrohr 42. Wird die in den Figuren 4 und 5a-5b beschriebene Vorrichtung 10.1 mit einem Kühlmedium 9 betrieben, so kann hierzu ein Transportschlauch 1.2 nach Figur 2 oder ein Transportschlauch 1.3 nach Figur 3a-3b eingesetzt werden.

Die Vorrichtung 10.1 kann allerdings auch ohne Kühlmedium 9 betrieben werden, so dass ein Transportschlauch 1.1 nach Figur 1a-1c eingesetzt werden kann.

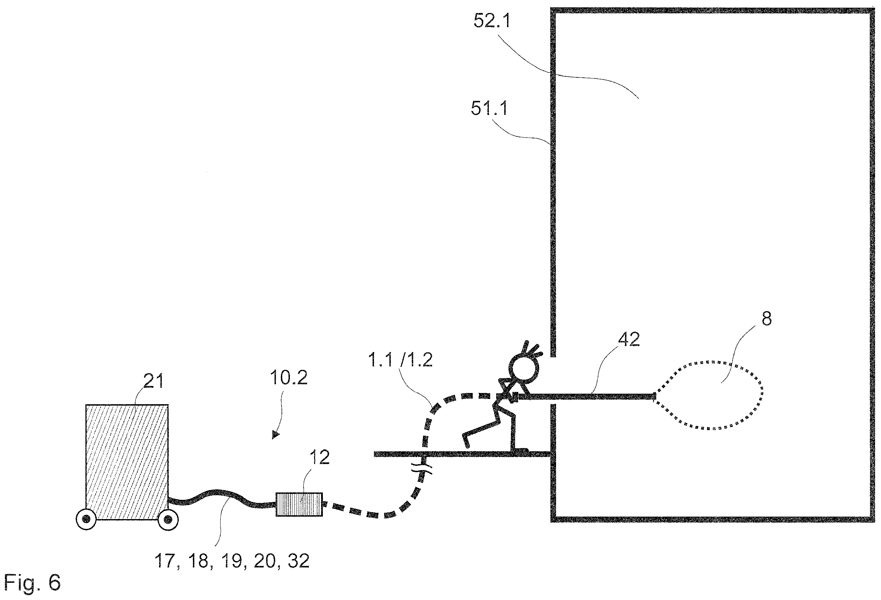

Die **Figur 6** zeigt eine Ausführungsvariante einer erfindungsgemäßen Vorrichtung 10.2. Die Vorrichtung 10.2 weist den zufuhrseitigen Aufbau der Vorrichtung 10.1 gemäss Figur 4 sowie den reinigungsseitigen Aufbau der Vorrichtung nach Figur 5b auf. Es wird an dieser Stelle auf eine Wiederholung der Beschreibung der Vorrichtung verzichtet und vielmehr auf die dazugehörigen Beschreibungsteile zur Figur 4 und 5b verwiesen.

Wie aus der Figur 6 hervorgeht, wird zur Reinigung des Innenraums 52.1 der Anlage 51.1 lediglich ein als Handteil ausgebildetes Führungsrohr 42 zusammen mit einer Behälterhülle 8 in den Innenraum 52.1 eingeführt.

Der Transportschlauch 1.1, welcher die Funktion einer Leitungsverlängerung hat, ist ausserhalb des zu reinigenden Innenraumes angeordnet und soll die Distanz zwischen Dosiereinheit 21 bzw. Mischeinheit 12 und der Arbeitsöffnung in der Anlage überbrücken. Entsprechend braucht der Transportschlauch 1.1 nicht gekühlt zu werden. Nichtsdestotrotz kann neben dem ungekühlten Transportschlauch 1.1 gemäss den Figuren 1a-1c auch ein gekühlter Transportschlauch 1.2, 1.3 insbesondere zur Kühlung der Behälterhülle 8 bei Heissanwendungen eingesetzt werden, wie er in den Figuren 2 und 3a-3b beschrieben ist. Da die Handhabung des gekühlten Transportschlauchs 1.2 gemäß Figur 2 einfacher ist gegenüber dem gekühlten Transportschlauch 1.3 gemäß Figur 3a-3b, kommt in dieser Konfiguration eher der Transportschlauch 1.2 gemäß Figur 2 zum Einsatz.

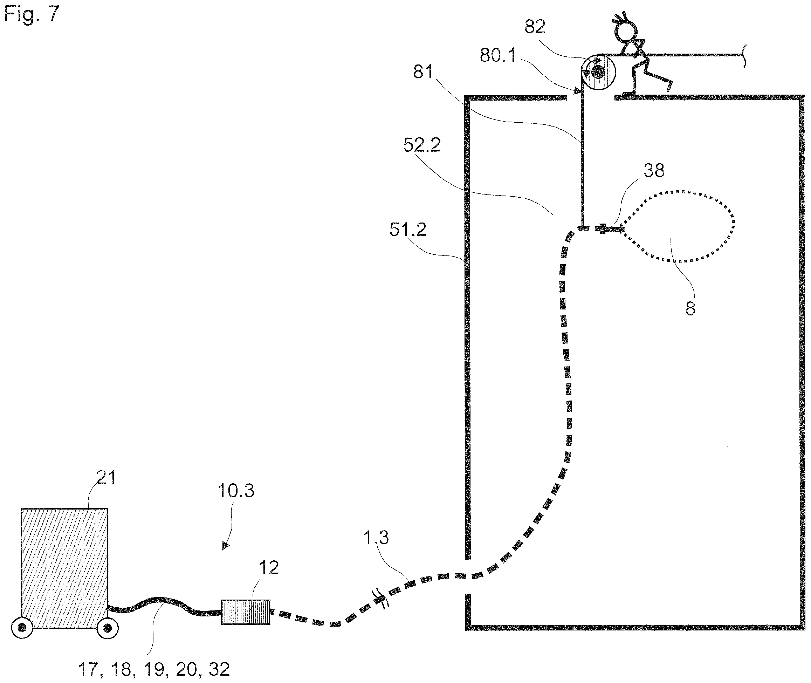

Die Figur 7 zeigt eine weitere Ausführungsvariante einer erfindungsgemäßen Vorrichtung 10.3. Die Vorrichtung 10.3 weist den zufuhrseitigen Aufbau der Vorrichtung 10.1 gemäß Figur 4 sowie den reinigungsseitigen Aufbau der Vorrichtung nach Figur 5a auf. Es wird an dieser Stelle auf eine Wiederholung der Beschreibung der Vorrichtung verzichtet und vielmehr auf die dazugehörigen Beschreibungsteile zur Figur 4 und 5a verwiesen.

Wie aus der Figur 7 hervorgeht, wird zur Reinigung des Innenraums 52.2 der Anlage 51.2 der Transportschlauch 1.3 zusammen mit einer Behälterhülle 8 in den zu reinigenden Innenraum 52.2 eingeführt. Der Transportschlauch 1.3. ist gemäß Figuren 3a-3b ausgebildet und weist eine Kühlung auf. Es wird an dieser Stelle auf eine Wiederholung der Beschreibung des Transportschlauchs 1.3. verzichtet und vielmehr auf die dazugehörigen Beschreibungsteile zur Figur 3a-3b verwiesen.

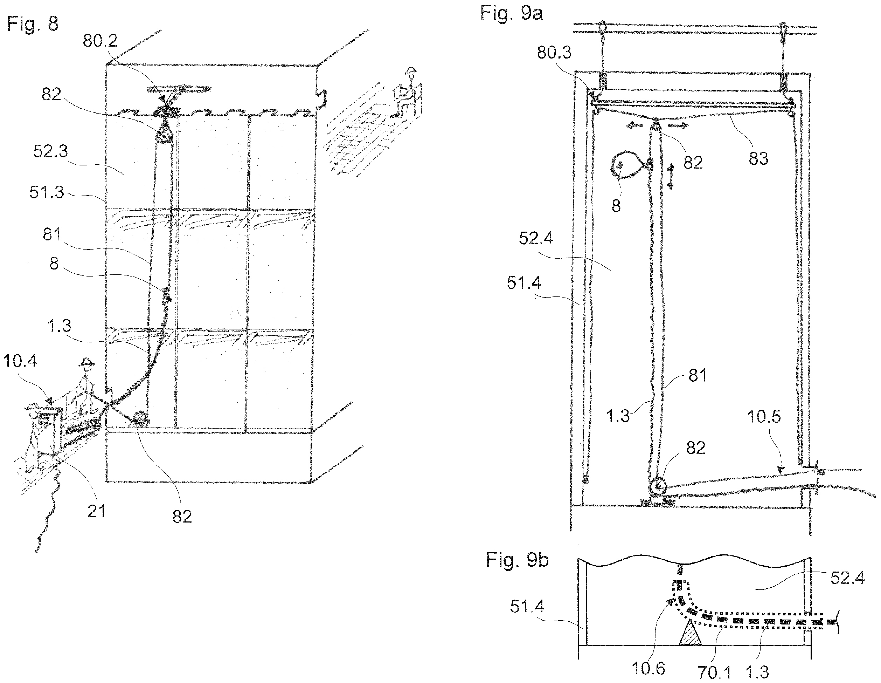

Ist der zu reinigende Innenraum 52.2 allerdings abgekühlt, weil die Anlage für die Reinigung nicht in Betrieb ist, kann neben dem gekühlten Transportschlauch 1.3 gemäß den Figuren 3a-3b auch ein ungekühlter Transportschlauch 1.1 gemäß den Figuren 1a-1c eingesetzt werden. Ferner kann in diesem Fall ebenfalls ein Transportschlauch 1.2 nach Figur 2 eingesetzt werden. Dies gilt auch für die Ausführungsbeispiele nach Figur 8, 9, 10a-10b und 11.

Die Vorrichtung 10.3 unterscheidet sich von der Vorrichtung 10.2 nach Figur 6 durch das fehlende Handteil in Form eines Führungsrohres 42, mittels welchem sich die Behälterhülle 8 im Innenraum 52.2 positionieren lässt.

Stattdessen ist ein Seilzugsystem 80.1 mit Zugseil 81 und Umlenkrolle 82 vorgesehen, mittels welchem der Transportschlauch mit der Behälterhülle 8 von ausserhalb der Anlage 51.2 von oben in die zu reinigende Position hochgezogen oder abgesenkt werden kann. Die Umlenkrolle ist ausserhalb der Anlage 51.2 und oberhalb des zu reinigenden Innenraums 52.2 angeordnet. Das Zugseil 81 wird durch eine Öffnung oberhalb des zu reinigenden Innenraums 52.2 in den Innenraum 52.2 eingeführt.

Die **Figur 8** zeigt eine weitere Ausführungsvariante einer erfindungsgemäßen Vorrichtung 10.4. Die Vorrichtung 10.4 unterscheidet sich von der Vorrichtung 10.3 gemäß Figur 7 lediglich im Aufbau des Seilzugsystems 80.2. Das Seilzugsystem 80.2 enthält eine im Deckenbereich des Innenraums 52.3 sowie eine am Boden des Innenraums 52.3 angeordnete Umlenkrolle 82, welche erlauben, das Zugseil 81 durch eine Öffnung im unteren Bereich des Innenraums 52.2 zu führen. Dank den beiden Umlenkrollen 82 lässt sich der Transportschlauch 1.3 mit der Behälterhülle 8 (hier noch nicht expandiert) durch die untere Öffnung mittels des über die beiden Umlenkrollen 82 umgelenkten Zugseils 81 im Innenraum 52.2 hochziehen und absenken.

Die **Figur 9a** zeigt eine weitere Ausführungsvariante einer erfindungsgemäßen Vorrichtung 10.5. Die Vorrichtung 10.5 unterscheidet sich von der Vorrichtung 10.3 und 10.4 gemäß den Figuren 7 und 8 ebenfalls lediglich im Aufbau des Seilzugsystems 80.3.

Der Grundaufbau des Seilzugsystems 80.3 entspricht dem Seilzugsystem 80.2 gemäß

Figur 8. Im Unterschied zu Figur 8 ist hier die im Deckenbereich des Innenraums 52.4 angeordnete Umlenkrolle 82 nicht fest montiert. Die besagte Umlenkrolle 82 ist vielmehr an einem im Wesentlichen horizontal ausgerichteten Führungsseil 83 befestigt und lässt sich mit diesem horizontal bewegen.

Das Führungsseil 83 lässt sich wie das Zugseil 81 ebenfalls von der unteren Öffnung aus bedienen.

Somit lässt sich der Transportschlauch 1.3 mit der Behälterhülle 8 durch die untere Öffnung über das Zugseil 81 im Innenraum 52.4 der Anlage 51.4 hochziehen und absenken. Zusätzlich lässt sich der Transportschlauch 1.3 mit der Behälterhülle 8 mittels des Führungsseils 83 horizontal verschieben. Auf diese Weise ist es möglich, im zu reinigenden Innenraum 52.4 jede Stelle mit dem Transportschlauch 1.3 zu erreichen.

Selbstverständlich sind auch anders aufgebaute Seilzugsysteme möglich. Auch der Einsatz von Flaschenzügen als Spezialform eines Seilzugsystems ist möglich.

In **Figur 9b** ist eine alternative Lösung zum Seilzugsystem nach Figur 9a dargestellt. Anstelle einer am Boden des Innenraums 52.4 angeordneten Umlenkrolle enthält die Vorrichtung 10.6 eine als Flexrohr 70.1 ausgebildete Einführhilfe mit einer Krümmung von 90°, mittels welchem der Transportschlauch 1.3 von einer horizontalen Einführrichtung vertikal nach oben umgelenkt wird. Der Aufbau eines Flexrohres 70.1 und seine Eigenschaften sind im allgemeinen Beschreibungsteil, auf welchen verwiesen wird, ausführlich beschrieben.

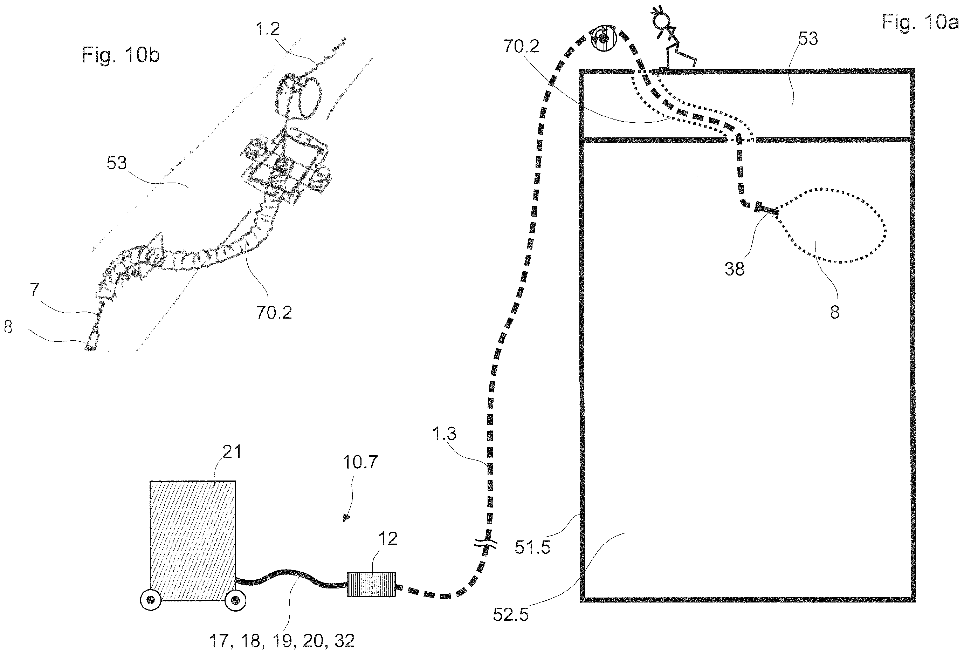

Die Vorrichtungen 10.7-10.8 gemäß den Figuren 10a-10b, 11 und 12 umfassen jeweils eine Einführhilfe für den Transportschlauch 1.3 in den Innenraum 52.5, 52.6 der Anlage 51.5, 51.6. Die Ausführung des Transportschlauchs 1.3 ist in diesem Zusammenhang von untergeordneter Bedeutung.

Die **Figuren 10a-10b** zeigen eine als Flexrohr 70.2 ausgebildete Einführhilfe. Der Aufbau eines Flexrohres 70.2 und seine Eigenschaften sind im allgemeinen Beschreibungsteil, auf welchen verwiesen wird, ausführlich beschrieben.

Gemäß Figur 10a-10b muss der Transportschlauch 1.3 von oben durch einen Zwischenraum 53 in den Innenraum 52.5 der zu reinigenden Anlage 51.5 geführt werden. Da die Durchlassöffnungen zueinander horizontal versetzt sind, lässt sich der Transportschlauch 1.3 nicht vertikal in den Innenraum 52.5 absenken.

In diesem Fall kommt ein Flexrohr 70.2 zum Einsatz, welches einmalig zwischen den beiden Durchlassöffnungen im Zwischenraum 53 montiert wird. Möglicherweise muss das Flexrohr 70.2 im Zwischenraum 53 entlang von Gängen geführt werden, so dass dieses einen bogenförmigen Verlauf aufweist.

Der Transportschlauch 1.3 lässt sich nun zum Reinigen des Innenraum 52.5 ohne grosse Mühe über das Flexrohr 70.2 durch den Zwischenraum 53 in den Innenraum 52.5 einführen bzw. absenken und wieder herausziehen.

Das Flexrohr 70.2 hat den Vorteil, dass der Transportschlauch 1.3 zum Ersetzen der Behälterhülle 8 für jeden Reinigungszyklus beliebig oft durch das Flexrohr 70.2 aus dem Innenraum 52.5 herausgezogen und wieder in diesen eingeführt werden kann. Dies, ohne dass jedes Mal eine im Zwischenraum 53 stationierte Hilfskraft den Transportschlauch 1.3 manuell hindurch führen muss.

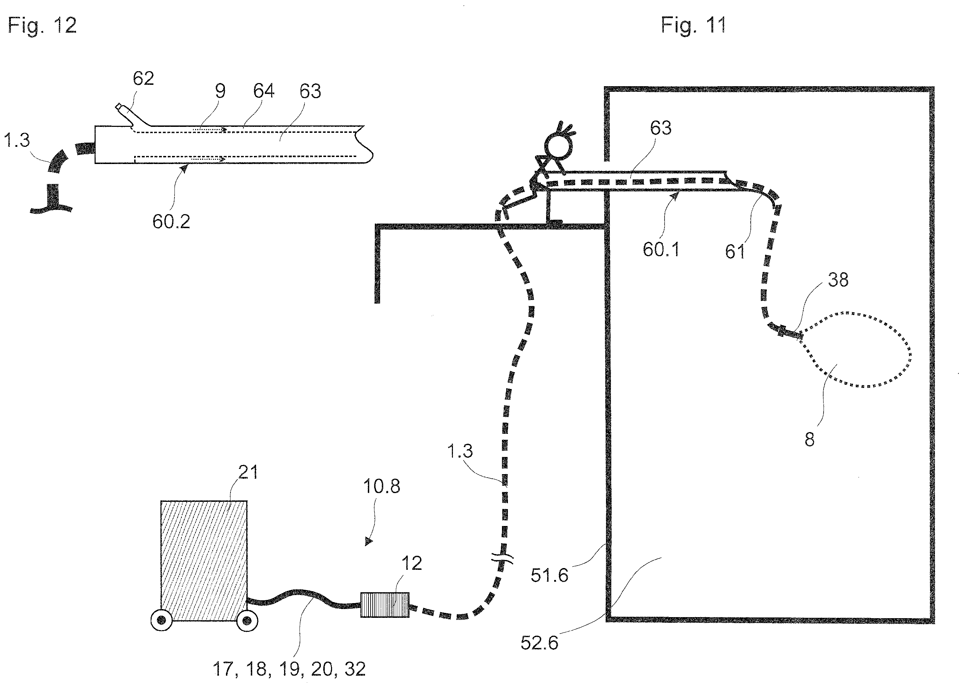

Gemäß der Ausführungsform nach **Figur 11 und 12** wird ein Transportschlauch 1.3 mit Behälterhülle 8 durch eine seitliche Öffnung seitlich in den Innerraum 52.6 der zu reinigenden Anlage 51.6 eingeführt. Die horizontale Einführlänge ist jedoch bei Konfigurationen ohne Führungsrohr, wie sie in den Figuren 3b und 5a gezeigt werden, limitiert. Zudem droht beim Einführen ein Abknicken des Transportschlauchs 1.3.

In diesem Fall kommt ein Einführrohr 60.1 zum Einsatz, welches mit einem Abschnitt durch die Öffnung in den Innenraum 52.6 geschoben wird. Der Aufbau eines Einführrohres 60.1 und seine Eigenschaften sind im allgemeinen Beschreibungsteil, auf welchen verwiesen wird, ausführlich beschrieben.

Der Transportschlauch 1.3 wird durch den geschlossenen Führungskanal 63 des Einführrohrs 60.1 geschoben und durch diesen horizontal geführt. Die horizontale Einführtiefe des Transportschlauchs 1.3 lässt sich nun durch die Einschubposition des Einführrohres 60.1 bestimmen.

Das Einführrohr 60.1 weist überdies an seiner reinigungsseitigen Öffnung eine nach unten gerichtete, bogenförmige Auflage 61 für den Transportschlauch 1.3 auf. Die bogenförmige Auflage 61 bildet einen Knickschutz für den Transportschlauch 1.3 aus.

Das in Figur 12 dargestellte Einführrohr 60.2 zeichnet sich durch eine Kühleinrichtung zum Kühlen des Einführrohrs 60.2 aus. Das Einführrohr 60.2 bildet einen ringförmig um den Führungskanal 63 angeordneten Kühlkanal 64 aus, welcher über einen Anschlussstutzen 62 mit einem Kühlmedium 9 gespiesen wird. Das Kühlmedium 9 kann reinigungsseitig aus einer Austrittsöffnung ausströmen. Es kann auch ein geschlossener Kühlkreislauf vorgesehen sein.

Die in **Figur 13** gezeigte Ausführungsform einer erfindungsgemäßen Vorrichtung umfasst eine Einlasseinrichtung bzw. Mischeinheit 101, welche nur ansatzweise dargestellt ist. Der Aufbau der Einlasseinrichtung bzw. Mischeinheit 101 kann - mit Ausnahme der Kühlmediumzufuhr - analog aufgebaut sein, wie im Ausführungsbeispiel nach Figur 4.

Die Einlasseinrichtung bzw. Mischeinheit 101 umfasst einen Einlassstutzen 95 zum Einleiten eines Kühlmediums 103 in den Transportkanal 93. Der Einlassstutzen 95 ist stromabwärts nach der Zündeinrichtung (nicht gezeigt) angeordnet.

An die Einlasseinrichtung bzw. Mischeinheit 101 schliesst über eine Schlauchkupplung mit Drehgelenk 105 ein Transportschlauch 91 an. Der Transportschlauch 91 weist zur Schlauchkupplung 105 hin eine Schlauchdichtung 97 auf.

Am reinigungsseitigen Ende des Transportschlauchs 91 ist ein Führungsrohr 100 über eine Schlauchkupplung 106 an den Transportschlauch 91 angeschlossen. Das Führungsrohr bildet eine Auslassöffnung für das explosionsfähige Gasgemisch aus. Der Transportschlauch 91 weist ferner vor der Schlauchkupplung 106 eine Schlauchdichtung 98 auf.

Der Transportschlauch 91 umfasst einen innen liegenden Kunststoffschlauch 92, welcher den Transportkanal 93 ausbildet. Der Kunststoffschlauch 92 wird von einem Wellschlauch 94 aus Metall, wie Stahl, oder Kunststoff umgeben, welche zusammen einen ringförmigen Kühlkanal 107 ausbilden. Der Wellschlauch 94 wird wiederum von einem Schutzschlauch 104, z. B. in Form eines Schlauchgeflechtes, umgeben.

Über einen Einlassstutzen 96 am Transportschlauch 91 kann ein Kühlmedium in den Kühlkanal 107 eingespiesen und in Richtung reinigungsseitigem Ende der Reinigungsvorrichtung transportiert werden.

Im Bereich der reinigungsseitigen Schlauchkupplung 98 ist am Transportschlauch 91 ein Rückschlagventil 99 angeordnet, über welches das Kühlmedium in den Transportkanal 93 eingeleitet werden kann. Das Kühlmedium 102 gelangt so im Bereich der reinigungsseitigen Schlauchkupplung 98 in das Innere des Führungsrohrs 100 und ist im Stande, dieses von innen zu kühlen.

Anstelle des Anschlussstutzens 95 kann das Kühlmedium 103 analog zum Ausführungsbeispiel nach Figur 4 an der Einlasseinrichtung bzw. an der Mischeinheit 101 in den Transportkanal 93 eingeleitet werden.

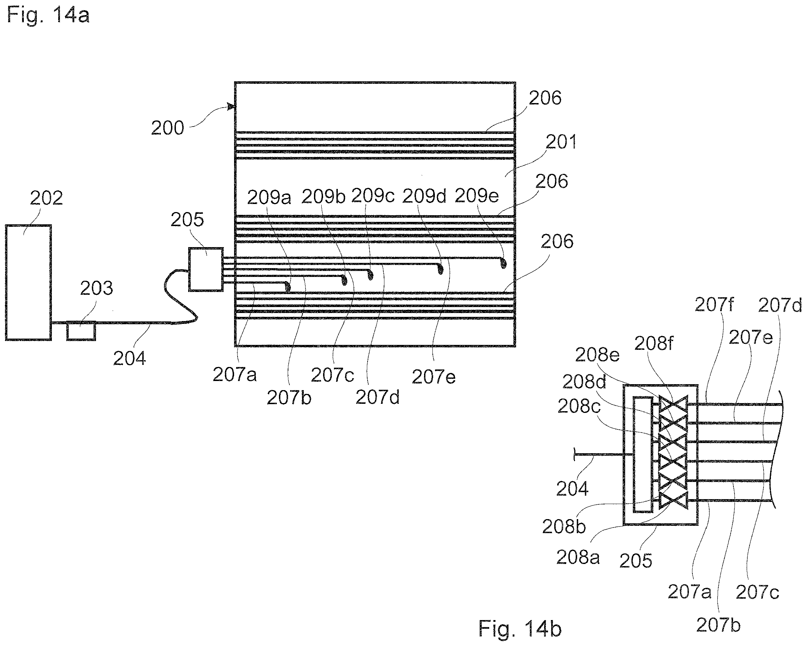

Die in **Figur 14a und 14b** gezeigte Ausführungsvariante einer erfindungsgemäßen Reinigungsvorrichtung mit Versorgungseinrichtung bzw. Dosiereinheit 202, Einlasseinrichtung bzw. Mischeinheit 203 und Transportschlauch 204 findet insbesondere Anwendung in Abhitzekesseln 200 mit horizontal verlaufenden Rohrbündeln 206, wie sie beispielsweise hinter einer Gasturbine oder einem Verbrennungsmotor in einem Gas-und-Dampf-Kombikraftwerk oder einem Blockheizkraftwerk angeordnet sind. Solche Abhitzekessel 200 haben die Aufgabe, die heissen Abgase aus einem vorgeschalteten Prozess zur Dampferzeugung oder seltener auch zur Warmwassergewinnung zu nutzen.

Allerdings ist die vorliegende Ausführungsvariante auch ganz allgemein in Innenräumen von zu reinigenden Behältern und Anlagen anwendbar.

Abhitzekessel 200 mit horizontalen Rohrbündeln 206 weisen bei deren Reinigung den Nachteil auf, dass sich der Transportschlauch mit der Behälterhülle nicht wie bei vertikal verlaufenden Rohrbündeln von oben nach unten absenken und so an verschiedenen Stellen im Innenraum positionieren lässt (siehe z. B. Figur 10b).

Um die horizontalen Rohrbündel vollständig und durchgängig zu reinigen, müssen die Reinigungslanze oder Lanzenkörper bzw. der Transportschlauch mit Behälterhülle bei jedem Reinigungsschritt von neuem und manuell durch eine seitliche Zugangsöffnung im Innenraum des Abhitzekessels 200 an den verschiedenen Reinigungsstellen zwischen zwei Rohrbündeln 206 positioniert werden.

Hierzu muss das Bedienpersonal jedes Mal von neuem in den Innenraum 201 des Abhitzekessels 200 steigen und die Reinigungsvorrichtung mit Behälterhülle zwecks Ausführen eines weiteren Reinigungsschrittes an einer neuen Stelle positionieren. Dies ist äusserst umständlich und beschwerlich wie auch zeitaufwändig. Hinzu kommt, dass jeder Reinigungsschritt, d.h. Explosion, mit einer Staubentwicklung verbunden ist. Das Bedienpersonal kann daher den nächsten Reinigungsschritt nicht umgehend einleiten, sondern muss mit dem Zustieg in den Innenraum 201 des Abhitzekessels 200 zuwarten bis sich die Staubentwicklung gelegt hat. Dadurch verzögert sich die Reinigung zusätzlich.

Gemäß der vorliegenden Ausführungsvariante wird nun über eine Kupplung, wie Schlauchkupplung eine Verteileinheit 205 an das reinigungsseitige Ende des Transportschlauchs 204 angeschlossen.

Die Verteileinheit 205 umfasst eine Mehrzahl von Ausgängen, hier deren fünf bzw. sechs, zum parallelen Anschliessen von Positionierschläuchen 207a-207f. Hierzu wird jeweils über eine Kupplung, wie Schlauchkupplung, an einen Ausgang ein Positionierschlauch 207a-207f lösbar angeschlossen.

Die im Rahmen dieser Ausführungsvariante offenbarten Kupplungen sind insbesondere als Schnellkupplung ausgebildet.

Während der Transportschlauch 204 mit der Verteileinheit 205 ausserhalb des zu reinigenden Behälters bzw. des Abhitzekessels 200 angeordnet ist, werden die Positionierschläuche 207a-207f in den Behälterinnenraum 201 hinein geführt. An den Positionierschläuchen 207a-207f, insbesondere an deren reinigungsseitigen Enden, wird jeweils eine Behälterhülle 209a-209f angeschlossen, Dies kann über ein Anschlussbauteil geschehen.

Die Behälterhüllen 209a-209f an den einzelnen Positionierschläuchen 207a-207f können nun an verschiedenen Stellen innerhalb des Behälterinnenraums 201, insbesondere an verschiedenen Stellen zwischen zwei horizontalen Rohrbündeln eines Abhitzekessels 200 positioniert werden.

Hierzu können die Positionierschläuche 207a-207f unterschiedlich lang ausgebildet sein.

Jedem an die Verteileinheit 205 angeschlossenen Positionierschlauch 207a-207f ist in der Verteileinheit 205 ein schaltbares Ventil 208a-208f zugeordnet. Auf diese Weise kann in jeden Positionierschlauch 207a-207f unabhängig von den anderen Positionierschläuchen 207a-207f explosionsfähiges Gemisch eingeleitet sowie eine Behälterhülle 209a-209f mit explosionsfähigem Gemisch versorgt bzw. befüllt werden. Das explosionsfähige Gemisch wird vom Transportschlauch 204 zur Verteileinheit 205 zugeführt. Die Ventile 208a-208f sind über eine Steuerungseinrichtung schaltbar.

Die beschriebene Reinigungsvorrichtung erlaubt nun, in einem Ablauf mehrere Positionierschläuche 207a-207f mit jeweils einer angeschlossenen Behälterhülle 209a-209f im Behälterinnenraum 201 an verschiedenen Stellen zu positionieren.

Im Anschluss an die Positionierung der Positionierschläuche 207a-207f mit den Behälterhüllen 209a-209f werden die Behälterhüllen 209a-209f in einer sequentiellen Abfolge über die Positionierschläuche 207a-207f mit explosionsfähigem Gemisch versorgt bzw. befüllt und gesteuert zur Explosion gebracht.

Entsprechend werden in einer sequentiellen Abfolge eine Serie von Reinigungsschritten durchgeführt. Dabei ist es nicht mehr notwendig, zwischen den einzelnen Reinigungsschritten den Behälterinnenraum 201 zu betreten.

Es ist allerdings auch denkbar, dass mehrere Positionierschläuche oder sogar sämtliche Positionierschläuche gleichzeitig mit explosionsfähigem Gemisch beschickt werden und entsprechend auch mehrere oder sämtliche Behälterhüllen 209a-209f gleichzeitig mit explosionsfähigem Gemisch versorgt bzw. befüllt und zur Explosion gebracht werden können.

Im diesem Fall können mehrere oder sämtlich Positionierschläuche auch über ein gemeinsames, steuerbares Ventil in der Verteileinheit mit explosionsfähigem Gemisch beschickt werden.

Gemäß einer alternativen Ausführungsform wird auf den Einsatz einer Verteileinheit verzichtet. Zur Ausführung einer sequentiellen Abfolge von Reinigungsschritten werden die Positionierschläuche vielmehr nacheinander, d.h. sequentiell, über eine einzelne Kupplung manuell mit dem Transportschlauch gekoppelt und nach Durchführung des Reinigungsschrittes jeweils wieder von diesem entkoppelt.

## Patentansprüche

1. Vorrichtung (10.1-10.8) zum Entfernen von Ablagerungen in Innenräumen (52.1-52.6) von Behältern oder Anlagen (51.1-51.6) mittels Explosionstechnologie, enthaltend eine Versorgungseinrichtung (37) zum Bereitstellen von wenigstens zwei Ausgangskomponenten, eine mit der Versorgungseinrichtung (37) verbundene Transportleitung (1.2-1.3, 91) mit einer reinigungsseitigen Auslassöffnung zum Transportieren von explosionsfähigem Gemisch zu einer Reinigungsstelle, und eine zwischen der Versorgungseinrichtung (37) und der Transportleitung (1.2-1.3, 91) angeordnete Mischeinheit (12) zur Herstellung eines explosionsfähigen Gemischs aus den wenigstens zwei von der Versorgungseinrichtung (37) bereitgestellten Ausgangskomponenten, ferner enthaltend eine Zündeinrichtung (31) zum gesteuerten Zünden des explosionsfähigen Gemisches, wobei die Transportleitung (1.2-1.3, 91) wenigstens abschnittsweise als Transportschlauch ausgebildet ist, welcher als Leitungsverlängerung zwischen der Mischeinheit (12) und der reinigungsseitigen Auslassöffnung dient, wobei der Transportschlauch (1.2-1.3) mehrschichtig aufgebaut ist und einen ersten Schlauch (4, 94), welcher bei der Zündung des explosionsfähigen Gemischs gegen radial wirkende Druckkräfte im Transportkanal der Transportleitung (1.2-1.3, 91) druckbeständig ist, und einen innen liegenden, vom ersten Schlauch (4, 94) umgebenen, zweiten Schlauch (5, 92) enthält, welcher gasundurchlässig ist.

2. Vorrichtung gemäß Anspruch 1, **dadurch gekennzeichnet, dass** der gasundurchlässige Schlauch (5, 92) aus Kunststoff besteht oder einen Kunststoff enthält.

3. Vorrichtung gemäß einem der Ansprüche 1 bis 2, **dadurch gekennzeichnet, dass** der erste Schlauch (4) aus Metall ist.

4. Vorrichtung gemäß einem der Ansprüche 1 bis 3, **dadurch gekennzeichnet, dass** der erste Schlauch (4) ein Schlauchgeflecht ist.

5. Vorrichtung gemäß einem der Ansprüche 1 bis 4, **dadurch gekennzeichnet, dass** der zweite Schlauch (5) ein Wellschlauch, insbesondere aus Metall, ist.

6. Vorrichtung gemäß einem der Ansprüche 1 bis 4, **dadurch gekennzeichnet, dass** zwischen der Versorgungseinrichtung (37) und dem Transportschlauch (1.1-1.3) eine Einlasseinrichtung (12), insbesondere mit Dosierarmaturen zur gesteuert dosierten Einleitung der Ausgangskomponenten in den Transportschlauch (1.1-1.3) angeordnet ist.

7. Vorrichtung gemäß Anspruch 6, **dadurch gekennzeichnet, dass** die Einlasseinrichtung bzw. Mischeinheit (12) die Zündeinrichtung (31) zum Zünden des explosionsfähigen Gemisches enthält.

8. Vorrichtung gemäß einem der Ansprüche 6 bis 7, **dadurch gekennzeichnet, dass** die Einlasseinrichtung bzw. Mischeinheit (12) wenigstens einen, insbesondere in einer Mischzone (13) angeordneten Temperatursensor (35) zur Messung der Temperatur, insbesondere in der Mischzone (13), enthält.

9. Vorrichtung gemäß einem der Ansprüche 6 bis 8, **dadurch gekennzeichnet, dass** die Einlasseinrichtung bzw. Mischeinheit (12) wenigstens einen, in Strömungsrichtung (S) insbesondere vor der Mischzone (13) angeordneten Drucksensor (34) zur Messung des Drucks insbesondere vor der Mischzone (13) enthält.

10. Vorrichtung gemäß einem der Ansprüche 1 bis 9, **dadurch gekennzeichnet, dass** die Vorrichtung (10.1-10.8) zur dosierten Einleitung der wenigstens zwei Ausgangskomponenten jeweils eine Dosierarmatur enthält, wobei die Dosierarmatur:
- in der/einer Dosiereinheit (21) oder
- in der Einlasseinrichtung bzw. Mischeinheit (12) enthalten ist.

11. Vorrichtung gemäß Anspruch 6 bis 9, **dadurch gekennzeichnet, dass** die Einlasseinrichtung bzw. Mischeinheit (12) Dosierarmaturen enthält, welche an den Zufuhrleitungen (17, 18) der Ausgangskomponenten, insbesondere in Strömungsrichtung (S) vor einer Mischzone (13), angeordnet sind.

12. Vorrichtung gemäß Anspruch 6 bis 11, **dadurch gekennzeichnet, dass** die Einlasseinrichtung bzw. Mischeinheit (12) Rückschlagventile (33) enthält, welche an den Zufuhrleitungen (17, 18) der Ausgangskomponenten, insbesondere in Strömungsrichtung (S) vor einer Mischzone (13) angeordnet sind.

13. Vorrichtung gemäß einem der Ansprüche 1 bis 12, **dadurch gekennzeichnet, dass** die Versorgungseinrichtung (37) eine Dosiereinheit (21) zum dosierten Bereitstellen der Ausgangskomponenten enthält.

14. Vorrichtung gemäß einem der Ansprüche 1 bis 13, **dadurch gekennzeichnet, dass** am reinigungsseitigen Ende des Transportschlauchs (1.1-1.3) ein Führungsrohr (42) angeordnet ist.

15. Vorrichtung gemäß einem der Ansprüche 1 bis 13, **dadurch gekennzeichnet, dass** am reinigungsseitigen Ende des Transportschlauchs (1.1-1.3) ein Behälteranschlussorgan (38) zum Anschliessen einer Behälterhülle (8) angeordnet ist.

16. Verfahren zum Entfernen von Ablagerungen in Innenräumen (52.1-52.6) von Behältern und Anlagen (51.1-51.6) mittels Explosionstechnologie mit einer Vorrichtung (10.1-10.8) gemäß den Ansprüchen 1 bis 15, mit den Schritten:
- Bereitstellen eines explosionsfähigen Gemischs in der Mischeinheit (12), und
- Transportieren des explosionsfähigen Gemischs zu einer reinigungsseitigen Auslassöffnung der Transportleitung (1.2-1.3);
- gesteuertes Zünden des explosionsfähigen Gemisches mittels einer Zündeinrichtung (31), wobei das explosionsfähige Gemisch zur Explosion gebracht wird.

17. Verfahren gemäß Anspruch 16, **gekennzeichnet, durch** folgende Schritte:
- Anbringen einer Behälterhülle (8) an der reinigungsseitigen Auslassöffnung der Transportleitung (1.2-1.3);
- Befüllen der Behälterhülle (8) mit dem durch die reinigungsseitige Auslassöffnung der Transportleitung (1.2-1.3) austretenden explosionsfähigen Gemischs.

## Claims

1. An appliance (10.1-10.8) for removing deposits in interiors (52.1-52.6) of receptacles or facilities (51.1-51.6) by way of explosion technology, comprising a supply device (37) for providing at least two starting components, a transport conduit (1.2-1.3, 91) which is connected to the supply device (37) and which has a cleaning-side outlet opening and is for transporting explosive mixture to a cleaning location, and a mixing unit (12) for creating an explosive mixture from the at least two starting components which are provided by the supply device (37) is arranged between the supply device (37) and the transport conduit (1.2-1.3, 91), further comprising an ignition device (31) for controlled ignition of the explosive mixture,
wherein the transport conduit (1.2-1.3, 91) is designed at least in a section or in sections as a transport hose, which serves as a conduit extension between the mixing unit and the cleaning-side outlet opening, wherein the transport hose (1.2-1.3) is constructed in a multi-layered manner and comprises a first hose (4, 94) which is pressure-resistant with regard to radially acting pressure forces in the transport channel of the transport conduit (1.2-1.3, 91) on igniting the explosive mixture, and an inner-lying second hose (5, 92) which is surrounded by the first hose (4, 94) and is gas-impermeable.

2. The appliance according to claim 1, **characterised in that** the gas-impermeable hose (5, 92), is made of plastic or comprising a plastic.

3. The appliance according to one of the claims 1 to 2, **characterised in that** the first hose (4) is of metal.

4. The appliance according to one of the claims 1 to 3, **characterised in that** the first hose (4) is a hose braiding.

5. The appliance according to one of the claims 1 to 4, **characterised in that** the second hose (5) is a corrugated hose, in particular of metal.

6. The appliance according to one of the claims 1 to 4, **characterised in that** an inlet device (12), in particular with metering fittings for the controlled metered introduction of the starting components into the transport hose (1.1-1.3) is arranged between the supply device (37) and the transport hose (1.1-1.3).

7. The appliance according to claim 6, **characterised in that** the inlet device or the mixing unit (12) comprises the ignition device (31) for igniting the explosive mixture.

8. The appliance according to one of the claims 6 to 7, **characterised in that** the inlet device or the mixing unit (12) comprises at least one temperature sensor (35) which in particular is arranged in a mixing zone (13) and is for measuring the temperature, in particular in the mixing zone (13).

9. The appliance according to one of the claims 6 to 8, **characterised in that** the inlet device or the mixing unit (12) comprises at least one pressure sensor (34) for measuring the pressure in particular upstream of the mixing zone (13), said pressure sensor being arranged in particular upstream of the mixing zone (13) in the flow direction (5).

10. The appliance according to one of the claims 1 to 9, **characterised in that** the appliance (10.1-10.8) each comprises a metering fitting for the metered introduction of the at least two starting components, wherein the metering fitting
- is contained in the / a metering unit (21) or
- in the inlet device or mixing unit (12).

11. Then appliance according to claim 6 to 9, **characterised in that** the inlet device or the mixing unit (12) comprises metering fittings which are arranged on the feed conduits (17, 18) of the starting components, in particular upstream of a mixing zone (13) in the flow direction (5).

12. The appliance according to claim 6 to 11, **characterised in that** the inlet device or mixing unit (12) comprises check valves (33) which are arranged on the feed conduits (17, 18) of the starting components, in particular upstream of a mixing zone (13) in the flow direction (5).

13. The appliance according to one of the claims 1 to 12, **characterised in that** the supply device (37) comprises a metering unit (21) for the metered provision of the starting components.

14. The appliance according to one of the claims 1 to 13, **characterised in that** a guide tube (42) is arranged at the cleaning-side end of the transport hose (1.1-1.3).

15. The appliance according to one of the claims 1 to 13, **characterised in that** a container connection element (38) for connecting a container envelope (8) is arranged at the cleaning-side end of the transport hose (1.1-1.3).

16. A method for removing deposits in interiors (52.1-52.6) of receptacles and facilities (51.1-51.6) by way of explosion technology with an appliance (10.1-10.8) according to the claims 1 to 15, with the steps:
- providing an explosive mixture in the mixing unit (12), and
- transporting the explosive mixture to a cleaning-side outlet opening of the transport conduit (1.2-1.3);
- controlled ignition of the explosive mixture by way of an ignition device (31), wherein the explosive mixture is brought to explode.

17. The method according to claim 16, **characterised by** the following steps:
- attaching a container envelope (8) to the cleaning-side outlet opening of the transport conduit (1.2-1.3);
- filling the container envelope (8) with the explosive mixture which exits through the cleaning-side outlet opening of the transport conduit (1.2-1.3).

## Revendications

1. Dispositif (10.1-10.8) pour l'élimination de dépôts dans des espaces intérieurs (52.1-52.6) de récipients ou d'installations (51.1-51.6) au moyen d'une technologie d'explosion, contenant un appareil d'alimentation (37) pour la fourniture d'au moins deux composants de départ, une conduite de transport (1.2-1.3, 91), reliée à l'appareil d'alimentation (37), avec une ouverture de sortie côté nettoyage pour le transport du mélange explosible vers un point de nettoyage, et une unité de mélange (12) agencée entre l'appareil d'alimentation (37) et la conduite de transport (1.2-1.3, 91) pour la fabrication d'un mélange explosible à partir des au moins deux composants de départ fournis par l'appareil d'alimentation (37), contenant en outre un appareil d'allumage (31) pour l'allumage contrôlé du mélange explosible,
la conduite de transport (1.2-1.3, 91) étant réalisée au moins par sections sous forme de tuyau de transport qui sert de prolongement de conduite entre l'unité de mélange (12) et l'ouverture de sortie côté nettoyage, le tuyau de transport (1.2-1.3) étant construit à plusieurs couches et contenant un premier tuyau (4, 94) qui, lors de l'allumage du mélange explosible, est résistant à la pression contre des forces de pression agissant radialement dans le canal de transport de la conduite de transport (1.2-1.3, 91), et un deuxième tuyau (5, 92) qui est imperméable aux gaz situé à l'intérieur, entouré par le premier tuyau (4, 94).

2. Dispositif selon la revendication 1, **caractérisé en ce que** le tuyau (5, 92) imperméable au gaz est constitué de matière plastique ou contient une matière plastique.

3. Dispositif selon l'une quelconque des revendications 1 à 2, **caractérisé en ce que** le premier tuyau (4) est en métal.

4. Dispositif selon l'une quelconque des revendications 1 à 3, **caractérisé en ce que** le premier tuyau (4) est un tuyau tressé.

5. Dispositif selon l'une quelconque des revendications 1 à 4, **caractérisé en ce que** le deuxième tuyau (5) est un tuyau ondulé, notamment en métal.

6. Dispositif selon l'une quelconque des revendications 1 à 4, **caractérisé en ce qu'**entre l'appareil d'alimentation (37) et le tuyau de transport (1.1-1.3) est agencé un appareil d'admission (12), notamment avec des raccords de dosage pour l'introduction dosée de manière contrôlée des composants de départ dans le tuyau de transport (1.1-1.3).

7. Dispositif selon la revendication 6, **caractérisé en ce que** l'appareil d'admission ou l'unité de mélange (12) contient l'appareil d'allumage (31) pour l'allumage du mélange explosible.

8. Dispositif selon l'une quelconque des revendications 6 à 7, **caractérisé en ce que** l'appareil d'admission ou l'unité de mélange (12) contient au moins un capteur de température (35), agencé notamment dans une zone de mélange (13), pour mesurer la température, notamment dans la zone de mélange (13).

9. Dispositif selon l'une quelconque des revendications 6 à 8, **caractérisé en ce que** l'appareil d'admission ou l'unité de mélange (12) contient au moins un capteur de pression (34), agencé notamment avant la zone de mélange (13) dans la direction d'écoulement (S), pour mesurer la pression, notamment avant la zone de mélange (13).

10. Dispositif selon l'une quelconque des revendications 1 à 9, **caractérisé en ce que** le dispositif (10.1-10.8) contient respectivement un raccord de dosage pour l'introduction dosée des au moins deux composants de départ, le raccord de dosage étant contenu :
- dans une/l'unité de dosage (21) ou
- dans l'appareil d'admission ou l'unité de mélange (12).

11. Dispositif selon les revendications 6 à 9, **caractérisé en ce que** l'appareil d'admission ou l'unité de mélange (12) contient des raccords de dosage qui sont agencées sur les conduites d'amenée (17, 18) des composants de départ, notamment avant une zone de mélange (13) dans la direction d'écoulement (S).

12. Dispositif selon les revendications 6 à 11, **caractérisé en ce que** l'appareil d'admission ou l'unité de mélange (12) contient des clapets anti-retour (33) agencés sur les conduites d'amenée (17, 18) des composants de départ, notamment avant une zone de mélange (13) dans la direction d'écoulement (S).

13. Dispositif selon l'une quelconque des revendications 1 à 12, **caractérisé en ce que** l'appareil d'alimentation (37) contient une unité de dosage (21) pour la fourniture dosée des composants de départ.

14. Dispositif selon l'une quelconque des revendications 1 à 13, **caractérisé en ce qu'**un tube de guidage (42) est agencé à l'extrémité côté nettoyage du tuyau de transport (1.1-1.3).

15. Dispositif selon l'une quelconque des revendications 1 à 13, **caractérisé en ce qu'**un organe de raccordement de récipient (38) est agencé à l'extrémité côté nettoyage du tuyau de transport (1.1-1.3) pour raccorder une enveloppe de récipient (8).

16. Procédé pour éliminer des dépôts dans des espaces intérieurs (52.1-52.6) de récipients et d'installations (51.1-51.6) au moyen d'une technique d'explosion avec un dispositif (10.1-10.8) selon les revendications 1 à 15, avec les étapes suivantes :
- la fourniture d'un mélange explosible dans l'unité de mélange (12), et
- le transport du mélange explosible vers une ouverture de sortie côté nettoyage de la conduite de transport (1.2-1.3) ;
- l'allumage contrôlé du mélange explosible au moyen d'un appareil d'allumage (31), le mélange explosible étant amené à exploser.

17. Procédé selon la revendication 16, **caractérisé par** les étapes suivantes :
- la mise enplace d'une enveloppe de récipient (8) au niveau de l'ouverture de sortie côté nettoyage de la conduite de transport (1.2-1.3) ;
- la remplissage de l'enveloppe de récipient (8) avec le mélange explosible qui sort par l'ouverture de sortie côté nettoyage de la conduite de transport (1.2-1.3).
